(19) Europäisches Patentamt
European Patent Office
Office européen des brevets

(11) **EP 3 139 260 A1**

(12) **EUROPEAN PATENT APPLICATION**

(43) Date of publication:
08.03.2017 Bulletin 2017/10

(51) Int Cl.:
*G06F 3/0488* (2013.01)  *G06F 3/0482* (2013.01)
*G06F 3/0485* (2013.01)  *G06F 3/0346* (2013.01)
*G06F 1/16* (2006.01)

(21) Application number: 16173576.6

(22) Date of filing: 08.06.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 03.09.2015 KR 20150124721

(71) Applicant: Samsung Electronics Co., Ltd.
Gyeonggi-do 16677 (KR)

(72) Inventors:
• HAN, Ji-youn
  Seoul (KR)
• KIM, Ji-gwang
  Seoul (KR)
• KIM, Joon-soo
  Seoul (KR)
• HONG, Ji-min
  Seoul (KR)

(74) Representative: Appleyard Lees IP LLP
15 Clare Road
Halifax HX1 2HY (GB)

(54) **ELECTRONIC DEVICE AND METHOD FOR CONTROLLING THE SAME**

(57) An electronic device (100) and a method of controlling the same, in which the electronic device includes a display configured to display (110) a polyhedral user interaction (UI), a sensor (130) configured to sense a user interaction with respect to the polyhedral UI, an audio outputter (120) configured to reproduce music content, and while an image of a first music content is being displayed on a first face of a plurality of faces of the polyhedral UI, a controller (140) is configured to control the audio outputter to reproduce a second music content which is in the same category as the first music content in response to the user interaction sensed by the sensor being a first interaction, and control the audio outputter to reproduce a third music content which is in a different category from the first music content, in response to the user interaction sensed by the sensor being a second interaction.

FIG. 6A

## Description

CROSS-REFERENCE TO RELATED APPLICATIONS

This application claims priority from Korean Patent Application No. 10-2015-0124721, filed on September 3, 2015 in the Korean Intellectual Property Office, the disclosure of which is incorporated herein by reference in its entirety.

BACKGROUND

1. Field

Devices and methods consistent with exemplary embodiments broadly relate to an electronic device and a method for controlling the electronic device, and more particularly, to an electronic device configured to provide a polyhedral user interaction (UI) in order to manage reproduction of music content, and a method for controlling the same.

**2. Description of the Related Art**

Recently, the amount of the content provided by electronic devices increases geometrically along with the development in the communication technology. For example, the related technology reproduced only the music content stored in an electronic device, but recently, various music contents can be reproduced by streaming the music content from an external server.

Meanwhile, the related art method for selecting the music content includes a method of first selecting category or genre, and then providing a plurality of music contents corresponding to the selected category or the selected genre in a list form. The above method may have an advantage in that the content can be browsed quickly in one direction, but it also has a disadvantage of inconvenience experienced when another category needs to be selected. That is, it is necessary to exit the list in order to select another category or genre.

SUMMARY

Exemplary embodiments may overcome the above disadvantages and other disadvantages not described above. Also, the present disclosure is not required to overcome the disadvantages described above, and an exemplary embodiment may not overcome any of the problems described above.

According to an exemplary embodiment, an electronic device is configured to provide a polyhedral user interaction (UI) allowing a user to intuitively select not only music content belonging to the same category as the currently-reproduced music content, but also music content belonging to a different category, and a method for controlling the same.

According to an aspect of an exemplary embodiment, an electronic device is provided, which may include a display configured to display a polyhedral user interaction (UI), a sensor configured to sense a user interaction with respect to the polyhedral UI, an audio outputter configured to reproduce music content, and a controller configured to control the display to display an image of a first music content on a first face of a plurality of faces of the polyhedral UI, and control the audio outputter to reproduce a second music content in the same category as the first music content, in response to the sensor sensing a first user interaction and to reproduce a third music content in a different category from the first music content in response to the sensor sensing a second user interaction.

Further, when the user interaction is a third interaction, the controller may control the audio outputter to select an arbitrary music content and reproduce the same.

Further, the first interaction may be an interaction of dragging the polyhedral UI in in one direction from among horizontal or vertical directions, the second interaction may be an interaction of dragging the polyhedral UI in another one from among the horizontal and vertical directions, and the third interaction may be an interaction of dragging the polyhedral UI in a diagonal direction.

Further, the controller may control the display to rotate the polyhedral UI in a direction that corresponds to the user interaction.

Further, the electronic device may include a buffer configured to temporarily store images of music contents to be displayed on faces adjoining the first face from among the plurality of faces of the polyhedral UI.

Further, the controller may control the display to display one of the images temporarily stored in the buffer on the rotated polyhedral UI, in response to the user interaction sensed by the sensor being the first interaction or the second interaction, and in response to the user interaction sensed by the sensor being the third interaction, to receive and display an image about external music content on the rotated polyhedral UI.

Further, the first interaction may be an interaction of dragging the polyhedral UI in one direction selected from among vertical and horizontal directions, the second interaction may be an interaction of dragging the polyhedral UI in another one of said vertical and horizontal directions, and the third interaction may be a flick interaction of dragging the polyhedral UI with a preset speed.

Further, in response to sensing the flick interaction, the controller may control the display to rotate the polyhedral UI according to a direction of the sensed flick interaction.

Further, the controller may determine a rotating speed and a rotating amount of the polyhedral UI based on a speed of the flick interaction.

Further, the electronic device may provide fading effect in which a volume of a previously-reproduced music content decreases and a volume of a newly-reproduced music content increases while music content is changed.

Further, the controller may control the display to rotate the polyhedral UI in response to a reproduction of the first music content ending, and display at least a portion of an image corresponding to a music content next to the first music content on the second face adjoining the first face.

Meanwhile, according to an aspect of an exemplary embodiment, a method of controlling an electronic device is provided, which may include displaying an image of a first music content on a first face among a plurality of faces in a polyhedral user interaction (UI), sensing a user interaction regarding the polyhedral UI, and reproducing a second music content included in the same category as the first music content in response to the sensed user interaction being a first interaction, and reproducing a third music content in a different category from that the first music content in response to the user interaction being a second interaction.

Further, the reproducing may include selecting and reproducing an arbitrary music content in response to the user interaction being a third interaction.

Further, the first interaction may be an interaction of dragging the polyhedral UI in one direction from among horizontal and vertical directions, the second interaction may be an interaction of dragging the polyhedral UI in one direction from among horizontal and vertical directions, and the third interaction may be an interaction of dragging the polyhedral UI in a diagonal direction.

Further, the controlling method may include rotating the polyhedral UI in a direction which corresponds to the sensed user interaction.

Further, the method may include temporarily storing images of music contents to be displayed on faces adjoining the first face among the plurality of faces.

Further, the method may include displaying one of the temporarily-stored images on the rotated polyhedral UI, in response to the user interaction being the first interaction or the second interaction, and receiving and displaying an image about an external music content on the rotated polyhedral UI in response to the user interaction being the third interaction.

Further, the first interaction may be an interaction of dragging the polyhedral UI in left and right directions, the second interaction may be an interaction of dragging the polyhedral UI in upper and lower directions, and the third interaction may be a flick of the polyhedral UI with a preset speed.

Further, in response to the flick interaction being sensed, the method may include rotating the polyhedral UI according to a direction of the sensed flick interaction.

Further, a rotating speed and a rotating amount of the polyhedral UI may be determined based on a speed of the sensed flick interaction.

Further, a fading effect may be provided, in which a volume of a previously-reproduced music content decreases and a volume of a newly-reproduced music content increases while the music content is being changed.

Further, the displaying may include rotating the polyhedral UI according to finishing a reproduction of the first music content, and displaying at least a portion of an image corresponding to a music content next to the first music content on the second face adjoining the first face.

Meanwhile, according to yet another aspect of an exemplary embodiment, an electronic device is provided, which may include a display configured to display a 3D user interface (UI), a sensor configured to sense a user interaction regarding the 3D UI, an audio outputter configured to reproduce music content, and a controller configured to control the audio outputter to change and reproduce the music content according to a direction of the user interaction, when the user interaction sensed through the sensor during display of an image of a first music content on a first face among a plurality of faces of the 3D UI is a first interaction in one of a horizontal direction and a vertical direction, and to control the audio outputter to select and reproduce an arbitrary music content when the user interaction is a third interaction in a diagonal direction.

Meanwhile, according to an aspect of an exemplary embodiment, a method of controlling an electronic device is provided, which may include displaying an image of a first music content on a first face from among a plurality of faces in a 3D user interface (UI), sensing a user interaction regarding the 3D UI, and changing and reproducing music content according to a direction of the user interaction when the user interaction is a first interaction in one of a horizontal direction and a vertical direction, and selecting and reproducing an arbitrary music content when the user interaction is a third interaction in a diagonal direction.

According to various exemplary embodiments including those described above, a user is able to reproduce music content through a polyhedral UI more easily and intuitively.

BRIEF DESCRIPTION OF THE DRAWINGS

The above and/or other aspects will become more apparent by describing certain exemplary embodiments with reference to the accompanying drawings, in which:

FIG. 1 is a block diagram illustrating an electronic device according to an exemplary embodiment;
FIG. 2 is a block diagram illustrating an electronic device in greater detail according to an exemplary embodiment;
FIG. 3 is a block diagram illustrating software stored in a memory according to an exemplary embodiment;
FIGS. 4A to 16E are diagrams illustrating examples of reproducing music content by using polyhedral user interaction (UI) according to various exemplary embodiments; and

FIG. 17 is a flowchart illustrating a method of controlling an electronic device according to an exemplary embodiment.

## DETAILED DESCRIPTION OF EXEMPLARY EMBODIMENTS

Certain exemplary embodiments will now be described in greater detail with reference to the accompanying drawings.

Terminology used herein will be briefly explained before elucidating exemplary embodiments in detail.

The terminology used throughout the exemplary embodiments are chosen in consideration of the functions, and among general terms widely used at present time. However, this may vary depending on the intents of those skilled in the art or precedents, or as new technology emerges. Further, in certain circumstances, terms may be arbitrarily selected by the Applicant, in which case the meanings thereof will be described in detail herein. Accordingly, defining the terms used herein will be based on the meanings of the terms and overall contents of exemplary embodiments, rather than simple names of the terms.

As exemplary embodiments may have a variety of modifications and several examples, certain exemplary embodiments will be exemplified in the drawings and described in detail in the description thereof. However, this is not intended to limit the scope to an exemplary embodiment, and therefore, it should be understood that all the modifications, equivalents or substitutes included under the invented spirit and technical scope are encompassed. In describing exemplary embodiments, detailed description of well-known technologies are not provided in detail since this would obscure exemplary embodiments with unnecessary details.

The terms 'first', 'second', and so on may be used for describing a variety of elements, but the elements should not be limited by the terms. The terms are used solely for the purpose of distinguishing one element from another.

A singular expression may include a plural expression, unless otherwise specified in context. It should be understood that terms such as "comprise" or "consist of" as used herein designate presence of characteristics, numbers, steps, operations, elements, components or a combination thereof described herein, and do not foreclose the presence or possibility of addition of one or more other characteristics, numbers, steps, operations, elements, components or a combination thereof.

According to exemplary embodiments, a "module" or "unit" performs at least one function or operation, and may be implemented as hardware or software, or a combination of hardware and software. Further, except the "modules" or "units" that have to be implemented as certain hardware, a plurality of "modules" or a plurality of "units" may be integrated into at least one module and realized as at least one processor (not illustrated).

Throughout the exemplary embodiments, when a certain portion is stated as being "connected" with another, this means that the portion is not only "directly connected", but also "electrically connected" while being intervened by another element in the middle. Further, when a certain portion is stated as "comprising" a certain element, unless otherwise stated, this means that the certain portion may include another element, rather than foreclosing the same.

Hereinbelow, certain exemplary embodiments will now be described in greater detail with reference to the accompanying drawings to enable those skilled in the art to work the same with ease. However, exemplary embodiments may be realized in a variety of different configurations, and not limited to descriptions provided herein. Further, those that are irrelevant with the description are omitted so as to describe exemplary embodiments more clearly, and similar drawing reference numerals are used for the similar elements throughout the description.

According to an exemplary embodiment, a user interaction is a motion made by a user to control an electronic device, and may include at least one of touch interaction, bending interaction, voice interaction, button interaction, or motion interaction, although not limited thereto. Further, the "user interaction" as used herein may refer to the same meaning as "user sensing" or "user manipulation".

According to an exemplary embodiment, the "touch interaction" may include touch gestures performed by a user on a display and a cover to control a device. Further, the "touch interaction" may include a touch (e.g., floating or hovering) in a state not contacting with the display, but at a predetermined distance or farther. A touch sensing may include a touch & hold gesture, a tap gesture to touch and then undo, a double tap gesture, a panning gesture, a flick gesture, a touch drag gesture to touch and then move in one direction, a pinch gesture, and so on, but not limited to thereto.

Further, according to an exemplary embodiment, a button sensing may refer to sensing in which a user controls a device by using the device or a physical button attached to a remote controller in order to control the device.

Further, according to an exemplary embodiment, a user interaction (UI) element may refer to an element that is able to perform interaction with a user and provide feedbacks such as visual, auditory, olfactory feedbacks, and so on, according to user sensing.

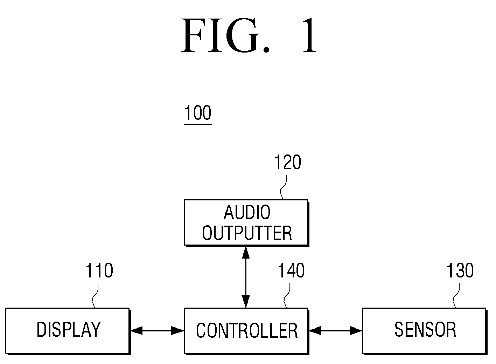

FIG. 1 is a block diagram illustrating an electronic device 100 according to an exemplary embodiment. Referring to FIG. 1, the electronic device 100 includes a display 110, an audio outputter 120, a sensor 130, and a controller 140. Meanwhile, the electronic device 100 according to an exemplary embodiment may be implemented to be an audio apparatus provided with a display, but this is merely one of exemplary embodiments, and the electronic device 100 may be implemented to be a variety of electronic devices such as smart phone, tablet PC, smart TV, and so on.

The display 110 may output image data. Specifically, the display 110 may display a polyhedral user interaction (UI). In this case, at least one face of the polyhedral UI may display a music content image (e.g., cover image, lyrics, and so on).

The audio outputter 120 may output audio data. Specifically, the audio outputter 120 may output music content that is selected through the polyhedral UI.

The sensor 130 may sense the user interaction. Specifically, the sensor 130 may sense the user interaction regarding the polyhedral UI. In this case, the user interaction may be a touch interaction of touching the display 110, but not limited thereto and is provided by way of an example.

The controller 140 may control the overall operation of the electronic device 100. Specifically, while the image about first music content is being displayed on the first face of a plurality of faces of the polyhedral UI, when the user interaction sensed through the sensor 130 is a first interaction, the controller 140 may control the audio outputter 120 to reproduce second music content included in the same category as that of the first music content. Further, when the user interaction is a second interaction, the controller 140 may control the audio outputter 120 to reproduce third music content included in a different category from that of the first music content. Further, when the user interaction is a third interaction, the controller 140 may control the audio outputter 120 to select and reproduce arbitrary music content. The "category" as used herein refers to a reference to classify the music content, and may include genre, article mood, singer, composer, or folder designated by a user. Further, the polyhedral UI may be a hexahedral UI (or cubic UI) having six square faces but is not limited thereto.

According to an exemplary embodiment, the first interaction may be an interaction of touching one point of the polyhedral UI and then dragging or swiping in left and right directions, the second interaction may be an interaction of touching one point of the polyhedral UI and then dragging or swiping in upper and lower directions, and the third interaction may be an interaction of touching one point of the polyhedral UI and then dragging or swiping in a diagonal direction. For example, when the touch interaction of dragging in the left direction is sensed, the controller 140 may control the audio outputter 120 to reproduce next music content belonging to the same category as that of the currently-reproduced, first music content. As another example, when the touch interaction of dragging in the upper direction is sensed, the controller 140 may control the audio outputter 120 to reproduce music content belonging to a category preceding that of the currently-reproduced first music content. As another example, when the touch interaction of dragging in the diagonal direction is sensed, the controller 140 may control the audio outputter 120 to select and reproduce arbitrary music content irrelevant to the currently-reproduced first music content. In this case, a method of selecting and reproducing the arbitrary music content may be referred to as "shuffling reproducing method".

Specifically, when the user interaction is the first interaction, the controller 140 may control the display 110 to rotate the polyhedral UI in the left and right directions to correspond to the user interaction, according to an exemplary embodiment. When the user interaction is the second interaction, the controller 140 may control the display 110 to rotate the polyhedral UI in the upper and lower directions to correspond to the user interaction, according to an exemplary embodiment. Further, when the user interaction is the third interaction, the controller 140 may control the display 110 to rotate the polyhedral UI in the diagonal direction to correspond to the user interaction, according to an exemplary embodiment. For example, when the touch interaction of dragging in the left direction is sensed, the controller 140 may control the display 110 to rotate the polyhedral UI in the left direction by 90°. As another example, when the touch interaction of dragging in the upper direction is sensed, the controller 140 may control the display 110 to rotate the polyhedral UI in the upper direction by 90°. As another example, when the touch interaction of dragging in the diagonal direction is sensed, the controller 140 may control the display 110 to rotate the polyhedral UI in the diagonal direction for several times.

Meanwhile, while the image corresponding to the first music content is being displayed on the first face of the polyhedral UI, the controller 140 may temporarily store, into a buffer, the images of the music contents to be displayed on the faces adjoining the first face of a plurality of faces. Specifically, the controller 140 may temporarily store images corresponding to second music content and third music content in the same category as that of the first music content, on a second face and a third face adjoining the first face in the left and right directions among a plurality of faces. Further, the controller 140 may temporarily store images corresponding to fourth music content and fifth music content in a different category from that of the first music content, on a fourth face and a fifth face adjoining the first face in the upper and lower directions among a plurality of faces.

Further, when the first interaction or the second interaction is sensed, the controller 140 may control the display 110 to display one of the images temporarily stored in the buffer, on the rotated polyhedral UI. For example, when the touch interaction of dragging in the left direction is sensed, the controller 140 may control the display 100 to rotate the polyhedral UI in the left direction by 90°, and display an image corresponding to the temporarily-stored second music content on a face located to the left of the first face. As another example, when the touch interaction of dragging in the upper direction is sensed, the controller 140 may control the display 110 to rotate the polyhedral UI in the upper direction by 90°, and display an image corresponding to the temporarily-stored fourth music content on the upper face, which is a face located above the first face.

Further, when the third interaction is sensed, the controller 140 may control the display 110 to receive an image about the external music content i.e., music content obtained from outside of the electronic device 100 and display the same on the rotated polyhedral UI. Thus, when the user interaction for the shuffling reproducing is sensed, the controller 140 may control the display 110 to receive an image corresponding to the music content, which is selected arbitrarily by an external server, rather than the temporarily-stored image, and display the received image on a face opposite the first face.

According to another exemplary embodiment, the first interaction may be an interaction of touching one point of the polyhedral UI and then dragging in left and right directions, the second interaction may be an interaction of touching one point of the polyhedral UI and then dragging in upper and lower directions, and the third interaction may be a flick interaction of touching one point of the polyhedral UI and then dragging with a predetermined speed or higher.

Specifically, when the flick interaction regarding the polyhedral UI is sensed, the controller 140 may control the display 110 to rotate the polyhedral UI according to the direction where the flick interaction is sensed. Specifically, when the flick interaction in the right direction is sensed regarding the polyhedral UI, the controller 140 may control the display 110 to rotate the polyhedral UI in the right direction for a plurality of times.

According to an exemplary embodiment, the controller 140 may determine a rotating speed and a rotating amount of the polyhedral UI according to a speed of the flick interaction. Specifically, the controller 140 may increase the speed of the polyhedral UI and the rotating amount of the polyhedral UI as the speed of the flick interaction becomes faster.

Meanwhile, a fade-in/out effect may be provided, in which, while the music content is being changed, a volume of a previously-reproduced music content decreases and a volume of a newly-reproduced music content increases. Through the fade-in/out effect, user is enabled to recognize the change in the music content more naturally.

Further, the controller 140 may control the display 110 to rotate the polyhedral UI according to elapse of a reproducing time of the first music content, and display at least a portion of an image corresponding to music content next to the first music content on the second face adjoining the first face. Since the polyhedral UI may be rotated according to the elapse of the reproducing time, user can confirm, in advance, the information about the music content to be reproduced next. An elapse of reproducing time, according to an exemplary embodiment, may indicate an end or finish of reproducing the music content. That is, the entire music content has been reproduced.

Specifically, while the image about the first music content is being displayed on the first face of a plurality of faces of the polyhedral UI, when the user interaction sensed through the sensor 130 is the first interaction in the horizontal direction or the second interaction in the vertical direction, the controller 140 may change the music content according to the direction of the user interaction and reproduce the same. When the user interaction is the third interaction in the diagonal direction, the controller 140 may control the audio outputter 120 to select and reproduce arbitrary music content.

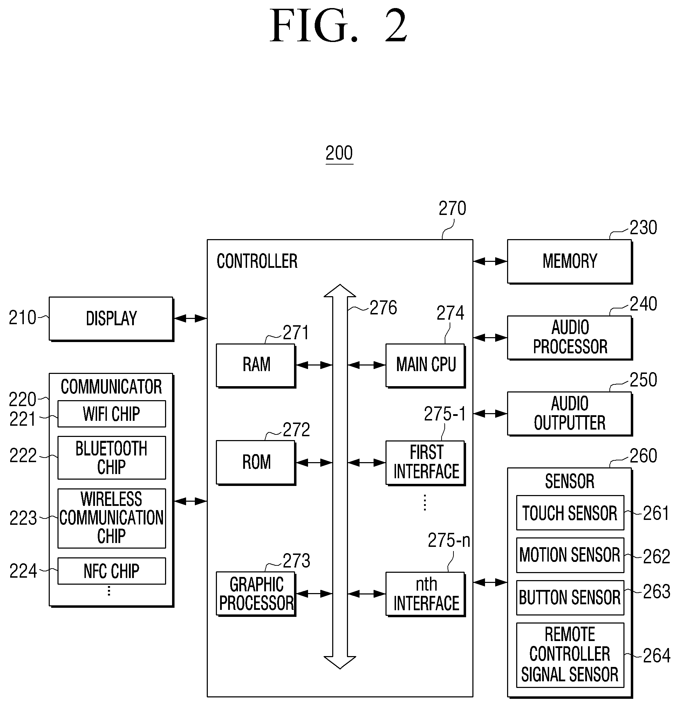

Exemplary embodiments will be described in greater detail below by referring to FIGS. 2 to 16E.

FIG. 2 is a block diagram illustrating an electronic device 200 according to an exemplary embodiment.

Referring to FIG. 2, the electronic device 200 may include a display 210, a communicator 220, a memory 230, an audio processor 240, an audio outputter 250, a sensor 260, and a controller 270. Meanwhile, the elements of the electronic device 200 illustrated in FIG. 2 is merely one of exemplary embodiments, and may not be necessarily limited to the block diagram described above. Thus, the electronic device 200 illustrated in FIG. 2 may be partly omitted or modified, or added according to the type or purpose of the electronic device 200.

The display 210 may display various screens or UIs on a display area. Specifically, when a music application is implemented, the display 210 may display a polyhedral UI that can control the music application. In this case, the polyhedral UI may be UI in a hexahedral form, and on a front that is viewable to a user may display an image corresponding to the currently-reproduced music content. The image corresponding to the music content may include a cover image of the music content, lyrics of the music content, and image including information of the music content, and so on, but not limited thereto.

The display 210 may have various sizes. For example, the display 210 may have sizes of 3 inches, 4 inches, 4.65 inches, 5 inches, 6.5 inches, 8.4 inches, and so on. The display 210 may be configured with a plurality of pixels. In this case, a "resolution" may be a representation of (the number of horizontal pixels) X (the number of vertical pixels) of a plurality of pixels. For example, the display 210 may have 320 X 320 resolution, 360 X 480 resolution, 720 X 1280 resolution, 1280 X 800 resolution, 3940 X 2160 resolution, and so on.

The display 210 may be implemented as a display panel of various shapes. For example, the display panel may be implemented with various display technologies such as liquid crystal display (LCD), organic light emitting diode (OLED), active-matrix organic light-emitting diode (AM-OLED), liquid crystal on silicon (LcoS), or digital light processing (DLP).

The display 210 may be implemented in a form of a flexible display form and may be connected to at least one of a front area, a side area, and a rear area of the electronic device 200. Due to a substrate as thin and flexible as a paper sheet, the flexible display may have such characteristic that it can be bent, curved, or rolled without being damaged. Such flexible display may be fabricated with not only a generally-used glass substrate, but also a plastic substrate. When the plastic substrate is used, the flexible display may be formed by using a low temperature processor rather than using a related fabrication processor in order to prevent damage to the plate. Further, the flexibility that allows bending and spreading may be obtained by substituting the glass substrate covering the flexible liquid crystal with a plastic film. Such flexible display has advantage that it is thin and light as well as impact-resistant, and bendable or foldable, and can be fabricated into various forms.

The display 210 may be combined with the touch sensor 211 and implemented as a touch screen in a layer structure. The touch screen may have not only a display function, but also a function to detect a touch input position, a touched area, and also a touch input pressure. Further, the touch screen may have a function to detect a proximity touch as well as a real touch.

The communicator 220 has a configuration to perform communication with various types of external devices according to various types of communication methods. The communicator 220 may include at least one of a WiFi chip 221, a Bluetooth chip 222, a wireless communication chip 223, and an NFC chip 224. The controller 270 may perform communication with an external server or various types of external devices by using the communicator 220.

Specifically, the WiFi chip 221 and the Bluetooth chip 222 may perform communication according to WiFi and Bluetooth schemes, respectively. When using the WiFi chip 221 or the Bluetooth chip 222, various connecting information such as SSID, session key, and so on may be first transmitted and received, so that connection for communication may be established by using the same for the transmission and reception of various data. The wireless communication chip 223 refers to a chip that performs communication according to the various communication standards such as IEEE, Zigbee, 3rd Generation (3G), 3rd Generation Partnership Project (3GPP), Long Term Evolution (LTE), and so on. The NFC chip 224 refers to a chip that operates in a NFC (Near Field Communication) scheme, using 13.56 MHz bandwidth among various RF-ID frequency bandwidths such as 135 kHz, 13. 56 MHz, 433 MHz, 860-960 MHz, 2.45 GHz, and so on.

Specifically, the communicator 220 may perform real-time streaming of the music content from an external server. Further, the communicator 220 may receive an image corresponding to the music content from an external server.

The memory 230 may store various programs and data necessary for the operation of the electronic device 200. The memory 230 may be implemented as a non-volatile memory, a volatile memory, a flash memory, a hard disk drive (HDD) or a solid state drive (SDD). The memory 230 may be accessed by the controller 270, and the controller 270 may perform reading/recording/revising/deleting/renewing of the data. According to an exemplary embodiment, the term "memory" as used herein may include a memory 230, a ROM 272, and a RAM 271 within the controller 270, or a memory card (not illustrated) mounted on the electronic device 200 (e.g., micro SD card, memory stick). Further, the memory 230 may include a buffer to temporarily store various data of the music content.

Further, the memory 230 may store programs, data, and so on to constitute various screens to be displayed on the display area of the display 210.

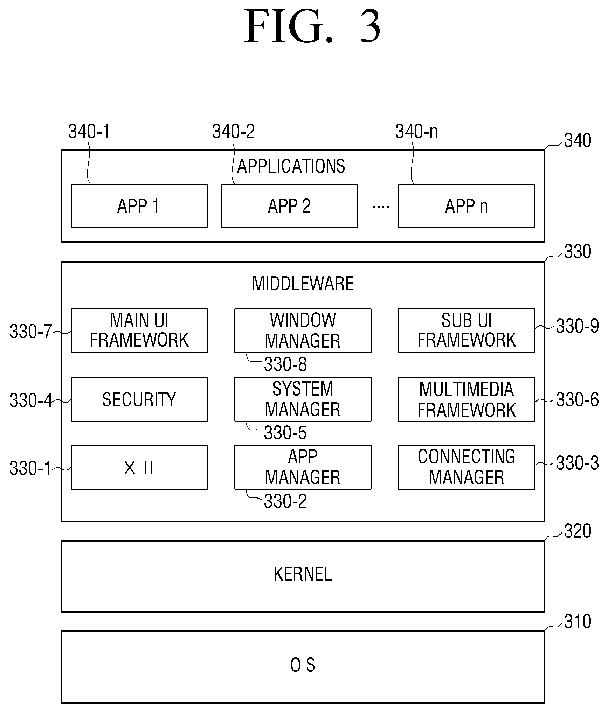

Hereinbelow, the structure of the software stored in the memory 230 will be described by referring to FIG. 3, according to an exemplary embodiment. According to FIG. 3, the memory 230 may store the software including operating system (OS) 310, kernel 320, middleware 330, applications 340, and so on.

The OS 310 performs a function to control and manage the overall operation of the hardware. Thus, the OS 310 is the class responsible for basic functions such as hardware management and memory, security, and so on.

The kernel 320 serves as a route to deliver respective signals including touch signal sensed at the sensor 260 to the middleware 330.

The middleware 330 includes various software modules to control the operation of the electronic device 200. Referring to FIG. 3, the middleware 330 includes X11 module 330-1, APP manager 330-2, connecting manager 330-3, security module 330-4, system manager 330-5, multimedia framework 330-6, main UI framework 330-7, window manager 330-8, and sub UI framework 330-9.

The X11 module 330-1 is a module configured to receive various event signals from various hardware provided in the electronic device 200. In this case, the event may be variously established so that it may be an event in which user gestures are sensed, an event in which a system alarm is generated, an event in which a specific program is implemented or finished, and so on.

The APP manager 330-2 is a module configured to manage the execution state of the various applications 340 installed in the memory 230. The APP manager 330-2 may call and execute an application corresponding to a corresponding event, when an application execution event is sensed by the X11 module 330-1.

The connecting manager 330-3 is a module configured to support wired and wireless network connections. The connecting manager 330-3 may include various specific modules such as DNET module, UPnP module, and so on.

The security module 330-4 is a module configured to support hardware certification, request permission, secure storage, and so on.

The system manager 330-5 may monitor the state of the respective elements inside the electronic device 200, and provide the monitoring result to the other modules. For example, when battery amount is short, when error occurs, or when the communication is disconnected, and so on, the system manager 330-5 may provide the corresponding monitoring result to the main UI framework 330-7 or the sub UI framework 330-9, and output an alarm message or a sound.

The multimedia framework 330-6 is a module configured to reproduce multimedia content stored in the electronic device 200 or provided from an external source. The multimedia framework 330-6 may include a player module, a camcorder module, a sound processing module, and so on. As a result, an operation may be performed, which reproduces various multimedia contents, and thus generates and reproduces screens and sounds.

The main UI framework 330-7 is a module configured to provide various UIs to be displayed on the main area of the display 210, and the sub UI framework 330-9 is a module configured to provide various UIs to be displayed on the sub area. The main UI framework 330-7 and the sub UI framework 330-9 may include an image compositor module to construct various UI elements, a coordinate compositor module to calculate coordinates in which UI elements will be displayed, a rendering module to render the constructed UI elements at the calculated coordinates, and a 2D/3D UI tool kit to provide tools for constructing UI in 2D or 3D form.

The window manager 330-8 may sense a touch event made by using the user body or a pen, or other input events. In response to sensing the event, the window manager 330-8 may deliver an event signal to the main UI framework 330-7 or the sub UI framework 330-9 so that the operation corresponding to the event is performed.

The electronic device 200 may also include various program modules including a writing module to draw a line according to the dragging trajectory in response to a user touching and dragging on the screen, and an angle calculating module to calculate pitch angle, roll angle, and yaw angle based on the sensor value sensed at the motion sensor 262.

The applications module 340 includes applications 340-1 to 340-n to support various functions. For example, the applications module 340 may include program modules to provide various services, such as, a navigation program module, a game module, an electronic book module, a calendar module, an alarm management module, a music reproducing module, and so on. The applications may be installed by default, or arbitrarily installed during use by a user and used. When UI element is selected, the main CPU 274 may implement an application corresponding to the selected UI element by using the applications module 340.

The software structure illustrated in FIG. 3 is merely one of exemplary embodiments, and exemplary embodiments are not necessarily limited thereto. Thus, partial omission or modification, or addition is of course possible, according to types or purposes of the electronic device 200. For example, the memory 230 may be additionally provided with various programs including a sensing module to analyze signals sensed at various sensors, a messaging module such as a messenger program, a text message program, an email program, and so on, a call info aggregator program module, a VoIP module, a web browser module, and so on.

Referring to FIG. 2, the audio processor 240 is an element to perform processing of the audio data of the images content. The audio processor 240 may perform various processing of the audio data, such as decoding and amplifying, noise filtering, and so on. The audio data processed by the audio processor 240 may be output to the audio outputter 250.

The audio outputter 250 is configured to output various alarm sounds or voice messages as well as various audio data processed through various processing such as decoding, amplifying, and noise filtering at the audio processor 240. Specifically, the audio outputter 250 may be implemented to be a speaker, but this is merely one of exemplary embodiments. Accordingly, the audio outputter 250 may also be implemented to be an outputting terminal that can output the audio data.

The sensor 260 may sense various user inputs. Further, the sensor 260 may detect at least one of various changes such as position change, illuminance change, acceleration change, and so on, of the electronic device 200, and deliver the corresponding electrical signal to the controller 270. Thus, the sensor 260 may sense state change generated based on the electronic device 200, generate a sensing signal accordingly, and deliver the same to the controller 270.

According to an exemplary embodiment, the sensor 260 may include various sensors. During driving of the electronic device 200 (or based on user setting), power may be supplied to at least one sensor under control of the sensor 260 to sense state change of the electronic device 200. In this case, the sensor 260 may be configured with various sensors, and may be configured by including at least one device among all forms of sensing devices that can detect the state change of the electronic device 200. For example, the sensor 260 may be configured by including at least one sensor among a variety of sensing devices such as touch sensor, acceleration sensor, gyro sensor, illuminance sensor, proximity sensor, pressure sensor, noise sensor (e.g., microphone), video sensor (e.g., camera module), pen recognition sensor, timer, and so on.

According to the purpose of sensing, the sensor 260 may be categorized into a touch sensor 261, a motion sensor 262, a button sensor 263, and a remote controller signal sensor 264, but not limited thereto. That is, the sensor may be categorized according to various other purposes.

Further, this is not limited to physical categorization, and accordingly, at least one or more sensors may be combined with each other to perform the functions of the sensors 261 to 264. Further, according to methods of implementing it, the configuration or the function of the sensor 260 may be partly included in the controller 270.

The touch sensor 261 may sense a user finger input, and output a touch event value corresponding to the sensed touch signal. The touch panel of the touch sensor 261 may be mounted under the display 210. The method of the touch sensor 261 for sensing a user finger input may include capacitive method and resistive method, for example. The capacitive method is to sense micro electricity excited by the user body and calculate the touch coordinates. The resistive method involves incorporating two electrode plates within the touch panel and calculating the touch coordinates by sensing electric current flowing when the upper and the lower plates at a touched point contact each other.

The touch sensor 261 may acquire an output signal from the touch sensor according to the user input. The touch sensor 261 may calculate user input information such as touch position or touch coordinates, the number of touches, touch intensity, cell ID, touch angle, touch area, and so on from the signal values, and determine the type of the touch input by using the calculated user input information. In this case, the touch sensor 261 may determine the type of the touch input by using the touch recognition algorithms, touch pattern data, and so on at the memory (not illustrated) of the touch panel. When the type of the touch input is determined, the touch sensor 261 may transmit information about the type of the touch input to the controller 270. The touch sensor 261 may sense the proximity touch position (or hovering position) input by a user, as described above.

In this case, the controller 270 may perform a portion of the functions of the touch sensor 261. For example, the touch sensor 261 may transmit to the controller 270 the signal value acquired from the touch sensor or the user input information calculated from the signal value. Using the received signal value or the user input information, the controller 270 may determine the type of the touch input by using the touch recognition algorithms, the touch pattern data stored in the memory 230, and so on.

The motion sensor 262 may sense the movement of the electronic device 200 (e.g., rotation, tilting, and so on) by using at least one of the acceleration sensor, the tilt sensor, the gyro sensor, and the 3-axis magnetic sensor. Further, the motion sensor 262 may deliver generated electrical signal to the controller 270. For example, the motion sensor 262 may measure the acceleration in which the moving acceleration of the electronic device 200 is added with the gravity acceleration. However, when there is no movement in the electronic device 200, only the gravity acceleration may be measured.

For example, when it is assumed that the motion sensor 262 uses the acceleration sensor, the gravity accelerations of X, Y, Z axes may be measured with reference to the electronic device 200. In this case, it is assumed herein that the positive direction (+) of the gravity acceleration is when the front face of the electronic device 200 is directed upward, and the negative direction (-) of the gravity acceleration is when the rear face of the electronic device 200 is directed upward. When the rear face of the electronic device 200 is placed in contact with the horizontal plane, the gravity acceleration measured by the motion sensor 262 may be such that X and Y axis components are measured as 0 m/sec$^2$, while the Z axis component alone is measured as a specific positive value (e.g., +9.8 m/sec$^2$). In contrast, when the front face of the electronic device 200 is placed in contact with the horizontal plane, the gravity acceleration measured by the motion sensor 262 may be such that the X and Y axis components are measured as 0 m/sec$^2$, while the Z axis component alone is measured as a specific negative value (e.g., -9.8 m/sec$^2$). Further, when it is assumed that the electronic device 200 is tilted on the surface of the table, the gravity acceleration measured by the motion sensor 262 may not be 0 m/sec$^2$, but a specific value on at least one axis. In this case, the square root of the sum of adding the square of the components on three axes, i.e., the size of the vector sum may be the specific value (e.g., 9.8 m/sec$^2$). In the example described above, the motion sensor 262 may sense the accelerations of X, Y, and Z axes, respectively. Meanwhile, the respective axes and the corresponding gravity accelerations may of course be changed according to the positions where the sensor is attached.

The button sensor 263 may sense the user interaction of selecting a button provided on the electronic device 200. Further, the remote controller signal sensor 264 may sense a signal corresponding to the button selected by a user among the buttons provided on the external remote controller.

Besides, the sensor 260 may additionally include a pen sensor (e.g., pen recognition panel) (not illustrated). The pen sensor may sense pen input of a user according to the manipulation of the user's touch pen (e.g., stylus pen, digitizer pen), and output a pen proximity event value or a pen touch event value. The pen sensor may be implemented with EMR method, for example, and may sense touch or proximity input according to intensity change of the electromagnetic field with the pen proximity or the pen touch. Specifically, the pen recognition panel may include an electromagnetic induction coil sensor having a grid structure, and an electromagnetic signal processor providing an AC signal of a predetermined frequency to respective loop coils of the electromagnetic induction coil sensor in a sequential order. When a pen with a resonance circuit embedded therein is present in the vicinity to the loop coils of the pen recognition panel, the magnetic field transmitted from the corresponding loop coils generates electric current at the resonance circuit within the pen based on the mutual electromagnetic induction. Based on this current, an induction field is generated from the coils of the resonance circuit within the pen, and the pen recognition panel detects this induction field from the loop coil in a signal reception state. Accordingly, the approaching position or touching position of the pen may be sensed.

A microphone (not illustrated) may receive a user voice to control a medical device through the electronic device 200 (e.g., photographing start, photographing stop, photographing end, and so on), and recognize the user voice through voice recognition module. Further, the recognition results may be transmitted to the controller 270. In this case, rather than being in the microphone, the voice recognition module may be part of the controller 270 or positioned outside of the electronic device 200.

The controller 270 (or a processor) may control the overall operation of the electronic device 200 by using various programs stored in the memory 230.

The controller 270 may be configured with a RAM 271, a ROM 272, a graphic processor 273, a main CPU 274, first to (n)th interfaces 275-1 to 275-n, and a bus 276. In this case, the RAM 271, the ROM 272, the graphic processor 273, the main CPU 274 and the first to (n)th interfaces 275-1 to 275-n may be connected to one another through the bus 276.

The RAM 271 may store O/S and application programs. Specifically, as the electronic device 200 boots, O/S may be stored in RAM 271 and various application data selected by a user may be stored in RAM 271.

The ROM 272 may store a command set for system booting, and so on. When a turn-on command is input and thus the electric power is supplied, the main CPU 274 may copy the stored O/S in the memory 230 to RAM 271 according to the commands stored in ROM 272, and boot the system by executing O/S. When the booting is completed, the main CPU 274 may copy various application programs stored in the memory 230 to the RAM 271, and perform various operations by executing the programs copied to the RAM 271.

The graphic processor 273 may generate screens including various objects such as items, images, texts, and so on, by using an operator (not illustrated) and a renderer (not illustrated). In this case, the operator may be configured to calculate attribute values such as coordinates, shape, size, color, and so on for each object to be displayed according to the layout of the screen, by using the controlling commands received from the sensor 260. Further, the renderer may be configured to generate various layouts of the screens including the objects based on the attribute values calculated at the operator. The screens generated at the renderer may be displayed on the display area of the display 210.

The main CPU 274 may access the memory 230 and perform booting by using OS stored in the memory 230. Further, the main CPU 274 may perform various operations by using various programs, contents, data, and so on stored in the memory 230.

The first to (n)th interfaces 275-1 to 275-n may be connected to respective elements described above. One of the first to (n)th interfaces 275-1 to 275-n may be a network interface connected to an external device through a network.

Specifically, the controller 270 may control the audio outputter 250 to reproduce the music content selected according to the user interaction of using the polyhedral UI displayed on the display 210, and control the display 210 to rotate the polyhedral UI.

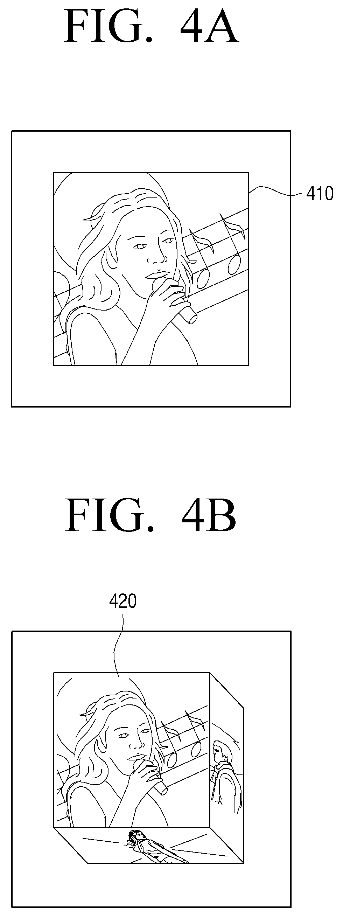

Exemplary embodiments will be described in greater detail below by referring to FIGS. 4A to 16E.

When the user interaction of executing the music application is sensed, the controller 270 may control the display 210 to display the polyhedral UI to control the music application. In this case, the music application may be an application to reproduce the music content stored within the electronic device 200, but not limited thereto. Accordingly, the music application may be an application to reproduce the music content streamed from an external server.

Specifically, according to an exemplary embodiment, the polyhedral UI may be hexahedral UI configured with six squares.

Specifically, referring to FIG. 4A, only the first face 410 among the six faces included in the polyhedral UI may be positioned in the front direction that is viewable to a user. In this case, the first face may display an image about the currently-reproduced music content. For example, the first face may display a variety of information about the currently-reproduced music content such as album jacket image, lyrics screen, screen containing various other information about the music content, and so on.

According to yet another exemplary embodiment, the controller 270 may control the display 210 to display only one face of the polyhedral UI, as illustrated in FIG. 4A, but this is merely one of exemplary embodiments. Accordingly, the controller 270 may control the display 210 to display at least two faces as illustrated in FIG. 4B to display the polyhedral UI 420 with depth.

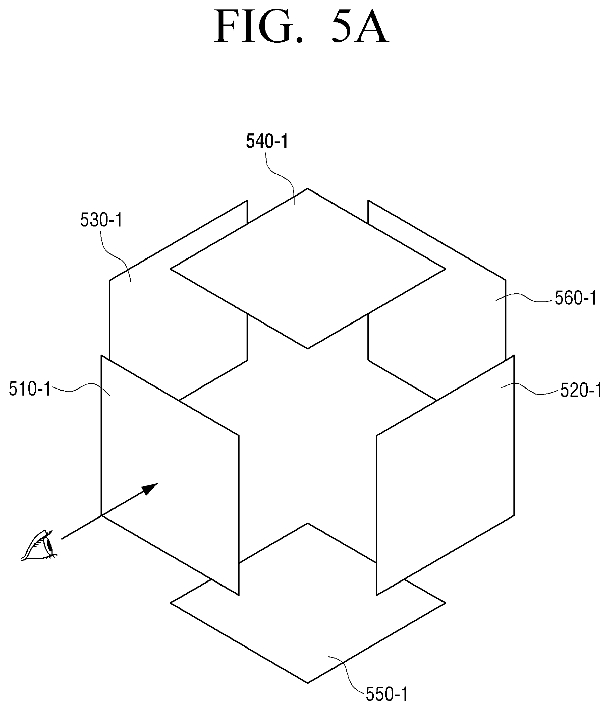

According to an exemplary embodiment, the polyhedral UI may include six faces 510-1 to 560-1 as illustrated in FIG. 5A. The six faces include a first face 510-1 viewed by a user from the front, a second face 520-1 adjoining at a right side of the first face, a third face 530-1 adjoining at a left side of the first face, a fourth face 540-1 adjoining at an upper side of the first face, a fifth face 550-1 adjoining at a lower side of the first face, and a sixth face 560-1 positioned opposite the first face.

In this case, a plurality of faces 510-1 to 560-1 may display the image about the music content. The first face 510-1 may display the image about the currently-reproduced music content. The second face 520-1 may display the image about the music content next to the currently-reproduced music content among the music content belonging to the same category as that of the currently-reproduced music content. The third face 530-1 may display the image about the music content preceding the currently-reproduced music content among the music content belonging to the same category as that of the currently-reproduced music content. The fourth face 540-1 may display the image about one music content among the music contents belonging to a category next to that of the currently-reproduced music content i.e., to a category different from the category to which the currently-reproduced music content belongs. The fifth face 550-1 may display the image about one music content among the music contents belonging to the category preceding that of the currently-reproduced music content i.e., to a category different from the category to which the currently-reproduced music content belongs.

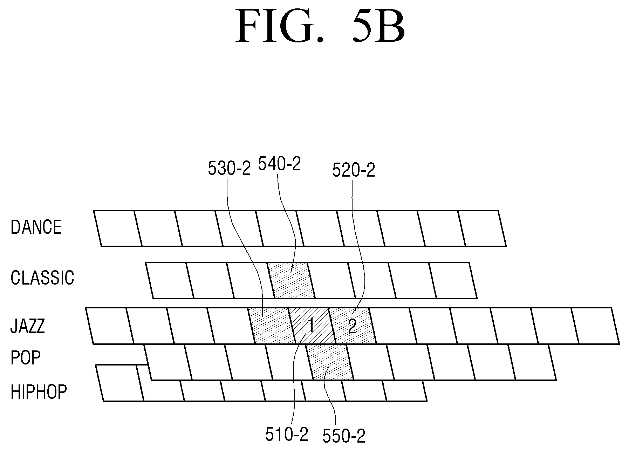

For example, referring to FIG. 5B, according to an exemplary embodiment, when the currently-reproduced music content is one 510-2 of a plurality of contents belonging to "Jazz" category, the second face 520-1 (shown in FIG. 5A) may display the image about the next music content 520-2 belonging to "Jazz", the third face 530-1 (shown in FIG. 5A) may display the image about the previous music content 530-2 belonging to "Jazz", the fourth face 540-1 (shown in FIG. 5A) may display the image about the music content 540-2 belonging to "Classic" music as a next category, and the fifth face 550-1 (shown in FIG. 5A) may display the image about the music content 550-2 belonging to "Pop" as a previous category. Meanwhile, referring to FIG. 5B, the horizontal axis represents a reproducing order of the music contents in the same category, and the vertical axis represents an order of the categories.

Meanwhile, the sixth face 560-1 (shown in FIG. 5A) may display an image about an arbitrary music content. Thus, when the user interaction for the shuffling reproducing is sensed, the controller 270 may control the display 210 to display the image about the arbitrary music content on the sixth face 560-1.

Specifically, the controller 270 may temporarily store in the buffer the image about the music content to be displayed on the faces 520-1 to 550-1 adjoining the first face 510-1 among a plurality of faces included in the polyhedral UI. Specifically, while the first music content corresponding to the first face 510-1 is reproduced, the controller 270 may temporarily store the image about the music content to be displayed on the second to fifth faces 520-1 to 550-1 in the buffer. For example, when one 510-2 of a plurality of contents belonging to "Jazz" category is currently reproduced, the controller 270 may temporarily store the image about the next music content 520-2 belonging to the same category ("Jazz"), the image about the previous music content 530-2 belonging to the same category ("Jazz"), the image about the music content 540-2 belonging to the next category ("Classic"), and the image about the music content 550-2 belonging to the previous category ("Pop").

As described above, according to an exemplary embodiment, by temporarily storing the image about the music contents to be displayed on the faces 520-1 to 550-1 adjoining the first face 510-1 among a plurality of faces included in the polyhedral UI, the temporarily-stored images on other faces may be immediately displayed as the polyhedral UI is rotated. Thus, more intuitive UI environment can be provided to a user.

Meanwhile, the image about the music content to be displayed on the sixth face 560-1 may not be temporarily stored in the buffer, but this is merely one of exemplary embodiments, and the image about the arbitrary music content may be temporarily stored as an image to be displayed on the sixth face 560-1.

In this case, the image about the music content to be displayed on a plurality of faces of the polyhedral UI may be changed as the polyhedral UI is rotated. Thus, each of a plurality of faces of the polyhedral UI may not necessarily correspond to one image about the music content. Rather, the corresponding music content may be changed as the polyhedral UI is rotated.

Further, when the user interaction is sensed through the sensor 260, the controller 270 may control the audio outputter 250 to change the currently-reproduced music content into another music content according to the user interaction and reproduce the same, and control the display 210 to rotate the polyhedral UI in a direction corresponding to the user interaction.

Specifically, when the user interaction sensed through the sensor 260 is the first interaction, the controller 270 may control the audio outputter 250 to change the music content belonging to the same category as that of the currently-reproduced music content and reproduce the same. When the user interaction sensed through the sensor 260 is the second interaction, the controller 270 may control the audio outputter 250 to change the music content belonging to the category different from that of the currently-reproduced music content and reproduce the same. When the user interaction sensed through the sensor 260 is third interaction, the controller 270 may control the audio outputter 250 to select the arbitrary music content and reproduce the same.

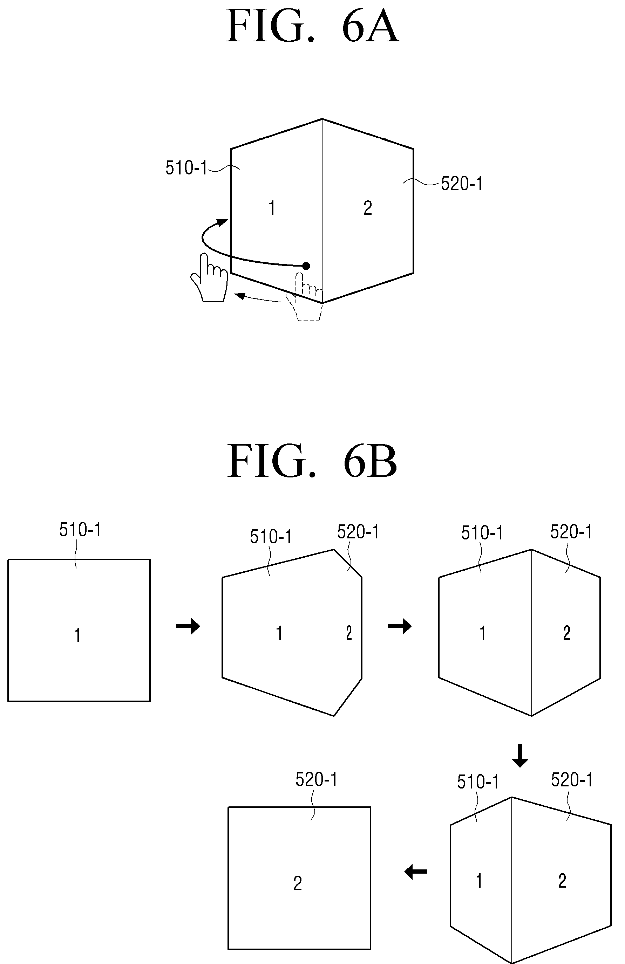

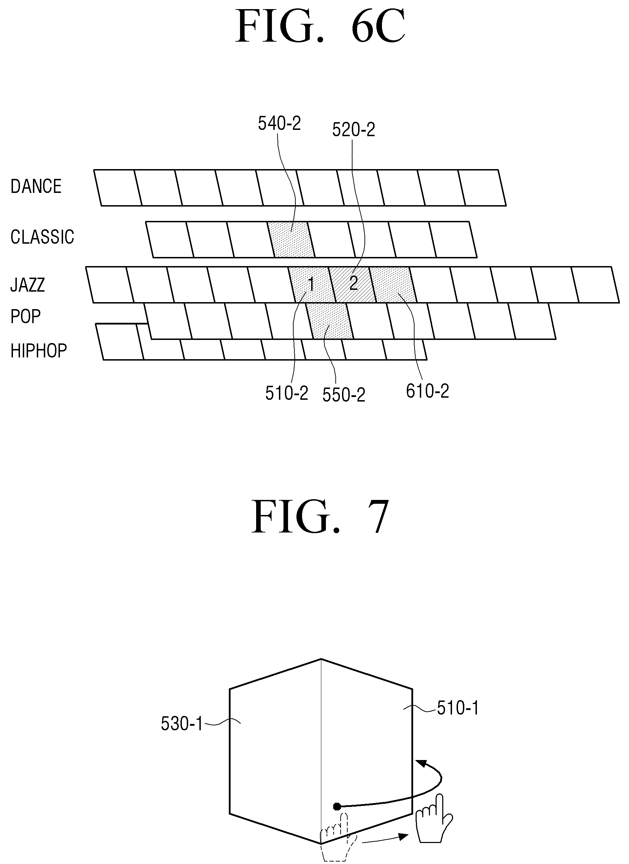

In this case, the first interaction may be the interaction of touching one point of the polyhedral UI and then dragging in the left and right directions. For example, the first interaction may be a user interaction of touching one point of the polyhedral UI and then dragging in the left direction from this point as illustrated in FIG. 6A according to an exemplary embodiment, or a user interaction of touching one point of the polyhedral UI and then dragging from this point in the right direction as illustrated in FIG. 7, according to an exemplary embodiment.

Specifically, referring to FIG. 6A, when sensing the user interaction of touching one point of the polyhedral UI and then dragging in the left direction, the controller 270 may control the audio outputter 250 to reproduce the next music content belonging to the same category as the currently-reproduced music content, and referring to FIG. 6B, the controller 270 may control the display 210 to rotate the polyhedral UI in the left direction by 90°, so that the second face 520-1 is positioned in a forward direction to a user. While the polyhedral UI is rotated, the controller 270 may control the display to express the front portion of the face more clearly and the back portion of the face blurredly in order to give a perspective. Further, the controller 270 may control the display to express the front portion of the image about the music content included in the polyhedral UI more clearly while providing the fade-out effect toward the back portion in order to give 3D effect.

Further, among the temporarily stored images in the buffer, the controller 270 may control the display 210 to display the image about the music content to be displayed on the second face 520-1, on the second face 520-1.

Further, the controller 270 may temporarily store the image about the music content to be displayed on the faces adjoining the second face 520-1 in the buffer, based on the second face 520-1 positioned as the front face. For example, referring to FIG. 6C, while the music content 520-2 corresponding to the second face 520-1 is reproduced, the controller 270 may temporarily store the image about the previous music content 510-2 belonging to the same category as that of the music content 520-2 as a music content image to be displayed on the first face 510-1, temporarily store the image about the next music content 610-2 belonging to the same category as that of the music content 520-2 as a music content image to be displayed on the sixth face 560-1, temporarily store the image about the music content 530-2 belonging to the category next to that of the music content 540-2 as a music content image to be displayed on the fourth face 540-1, and temporarily store the image about the music content 550-2 belonging to the category preceding that of the music content 520-2 as a music content image to be displayed on the fifth face 550-1.

Meanwhile, although the exemplary embodiment is described above with reference to an example of the user interaction of dragging in the left direction, this is merely one of exemplary embodiments, and the technical essence described above may be applied to the user interaction of dragging in the right direction.

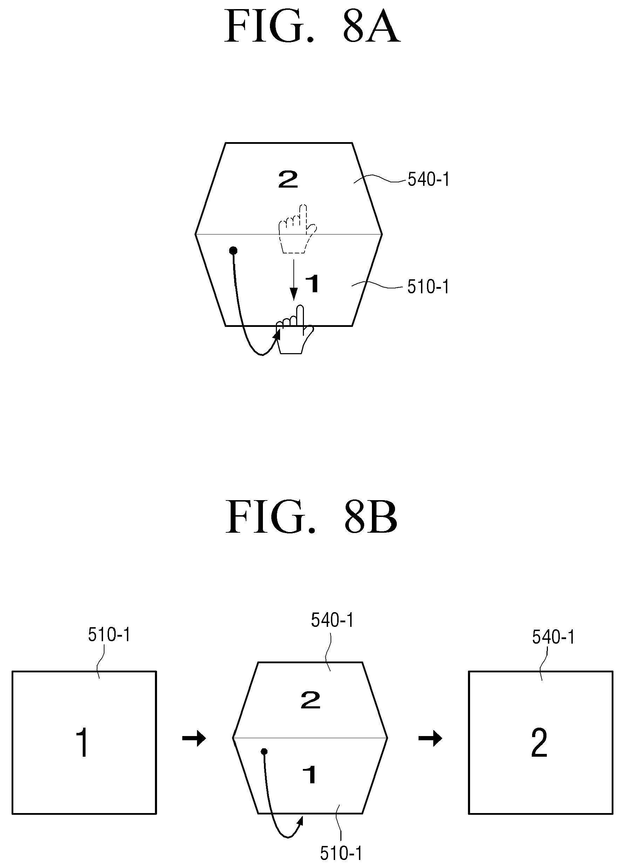

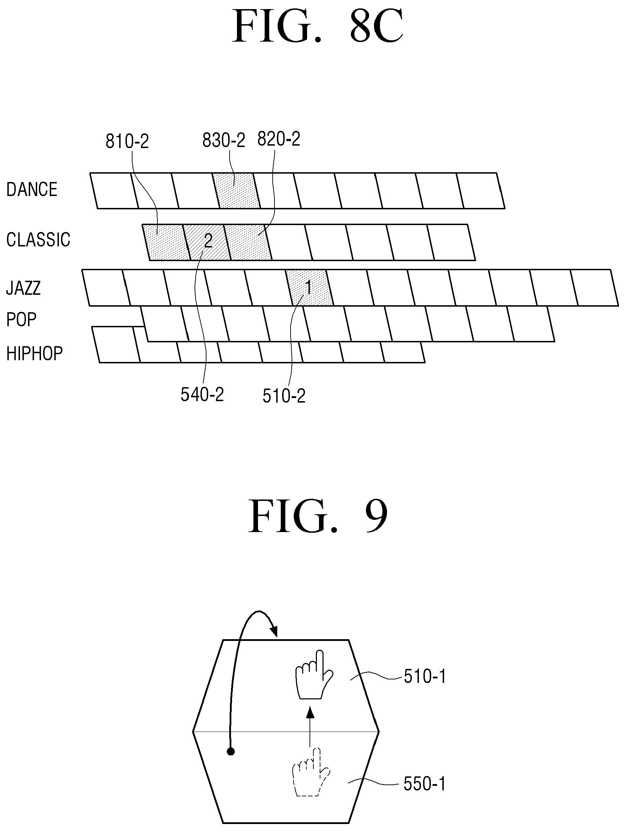

Further, the second interaction may be the interaction of touching one point of the polyhedral UI and then dragging in the upper and lower directions. For example, the second interaction may be a user interaction of touching one point of the polyhedral UI and then dragging from this point in the lower direction as illustrated in FIG. 8A, or a user interaction of touching one point of the polyhedral UI and then dragging in the upper direction as illustrated in FIG. 9.

Specifically, referring to FIG. 8A, when sensing the user interaction of touching one point of the polyhedral UI and then dragging in the lower direction, the controller 270 may control the audio outputter 250 to reproduce the music content belonging to the category next to the currently-reproduced music content, and referring to FIG. 8B, the controller 270 may control the display 210 to rotate the polyhedral UI in the lower direction by 90°, so that the fourth face 540-1 is positioned in a forward direction to a user.

Further, among the temporarily stored images in the buffer, the controller 270 may control the display 210 to display the image about the music content 540-2 to be displayed on the fourth face 540-1, on the fourth face 540-1.

Further, the controller 270 may temporarily store the image about the music content to be displayed on the faces adjoining the fourth face 540-1 in the buffer, based on the fourth face 540-1 positioned on the front. For example, the controller 270 may temporarily store the image about the previous music content 510-2 belonging to the previous category to that of the music content 540-2 as a music content image to be displayed on the first face 510-1, temporarily store the image about the music content 830-2 belonging to the category next to that of the music content 540-2 as a music content image to be displayed on the sixth face 560-1, temporarily store the image about the next music content 820-2 belonging to the same category as that of the music content 540-2 as a music content image to be displayed on the second face 520-1, and temporarily store the image about the music content 810-2 belonging to the category preceding the music content 540-2 as a music content image to be displayed on the third face 530-1.

Meanwhile, although the exemplary embodiment is described above with reference to an example of the user interaction of dragging in the lower direction, this is merely one of exemplary embodiments, and the technical essence described above may be applied to the user interaction of dragging in the upper direction.

Further, when the category is changed according to the user interaction, and when there is previously-reproduced music content in the changed category, the controller 270 may select the latest reproduced content. Further, when there is no previously-reproduced music content in the changed category, the controller 270 may select the first music content of the changed category.

Meanwhile, although it is exemplified above that the first interaction is the user interaction of dragging in the left and right directions, and the second interaction is the user interaction of dragging in the upper and lower directions, this is merely one of exemplary embodiments, and the first interaction or the second interaction may be implemented as another interaction. For example, the first interaction may be the user interaction of selecting one of the left and right buttons of the remote controller, and the second interaction may be the user interaction of selecting one of the upper and lower buttons of the remote controller. As another example, the first interaction may be user motion interactions in the left and right directions, and the second interaction may be user motion interactions in the upper and the lower directions.

Further, when the user interaction sensed through the sensor 260 is the third interaction, the controller 270 may control the audio outputter 250 to select arbitrary music content and reproduce the same.

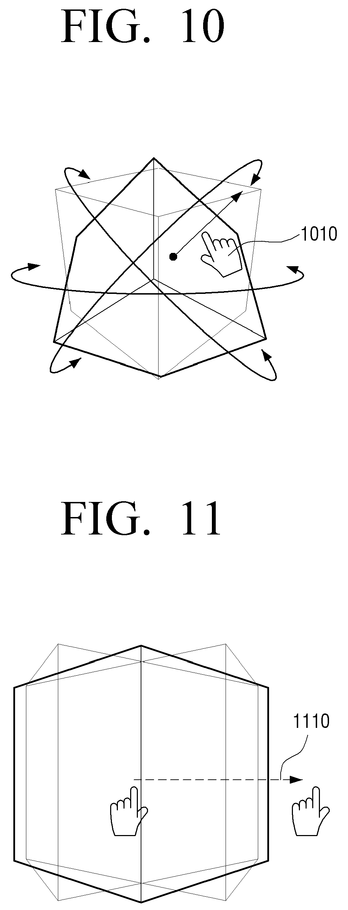

In this case, the third interaction may be a user interaction 1010 of touching one point of the polyhedral UI and then dragging in the diagonal direction, as illustrated in FIG. 10, according to an exemplary embodiment. When the drag interaction 1010 in the diagonal direction is sensed, the controller 270 may control the audio outputter 250 to select arbitrary music content regardless of the category of the currently-reproduced music content and reproduce the same, and control the display 210 to rotate the polyhedral UI in the diagonal direction for a plurality of times. In this case, the controller 270 may control the display 210 to display the image about the arbitrary music content received externally on the sixth face 560-1 among a plurality of faces included in the polyhedral UI.

According to another exemplary embodiment, the third interaction may be a flick interaction of touching one point of the polyhedral UI and then dragging with a preset speed or faster. When the flick interaction is sensed, the controller 270 may control the audio outputter 250 to select the arbitrary music content regardless of the category of the currently-reproduced music and reproduce the same. Further, the controller 270 may control the display 210 to rotate the polyhedral UI for a plurality of times according to the direction of the flick interaction.

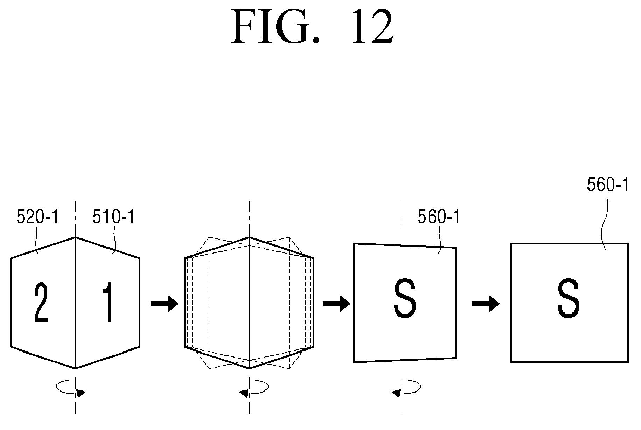

Specifically, when sensing the flick interaction 1110 of touching one point of the polyhedral UI and then dragging in the right direction with a preset speed or faster as illustrated in FIG. 11, the controller 270 may control the display 210 to rotate the polyhedral UI in the right direction for a plurality of times, so that the sixth face 560-1 opposite the first face 510-1 is positioned in a forward direction to a user, as illustrated in FIG. 12 according to an exemplary embodiment. Specifically, when the flick interaction in the right direction is sensed, the controller 210 may rotate the polyhedral UI according to a mathematical formula 1 below for the shuffling reproducing.

【Mathematical formula 1】

$$(-360*N-180)^o$$

That is, when the third interaction for the shuffling reproducing is sensed, the controller 270 may control the display 210 to select music to be reproduced and display the image about the music to be displayed, on the sixth face 560-1 of the polyhedral UI.

Meanwhile, according to formula 1, N may denote a rotating amount of the polyhedral UI, and may be determined by the speed of the flick interaction. Thus, the rotating amount of the polyhedral UI may increase as speed of the flick interaction becomes faster. Additionally, the rotating amount of the polyhedral UI may be slower if a speed of the flick interaction is determined to be slower. In an exemplary embodiment, the rotating amount is in relation to the properties of the flick interaction. By way of an example, attributes of the flick interaction such as speed of the interaction may be used to determine rotation amount for the polyhedral UI. The speed of the flick interaction may be determined based on length of input (determined based on touch starting point and touch ending point) divided by a duration of the input (a start time of the input and an end time of the input). This is provided by way of an example only and not by way of a limitation. According to yet another exemplary embodiment, a distance of the flick or time of the flick or a combination of the two may be used to set the rotation of the polyhedral UI in relation to the attributes of the flick.

Further, the controller 270 may determine rotating speed of the polyhedral UI according to the speed of the flick interaction. Specifically, the controller 270 may determine the rotating speed of the polyhedral UI to be faster when the speed of the flick interaction becomes faster, and determine the rotating speed of the polyhedral UI to be slower when the speed of the flick interaction becomes slower.

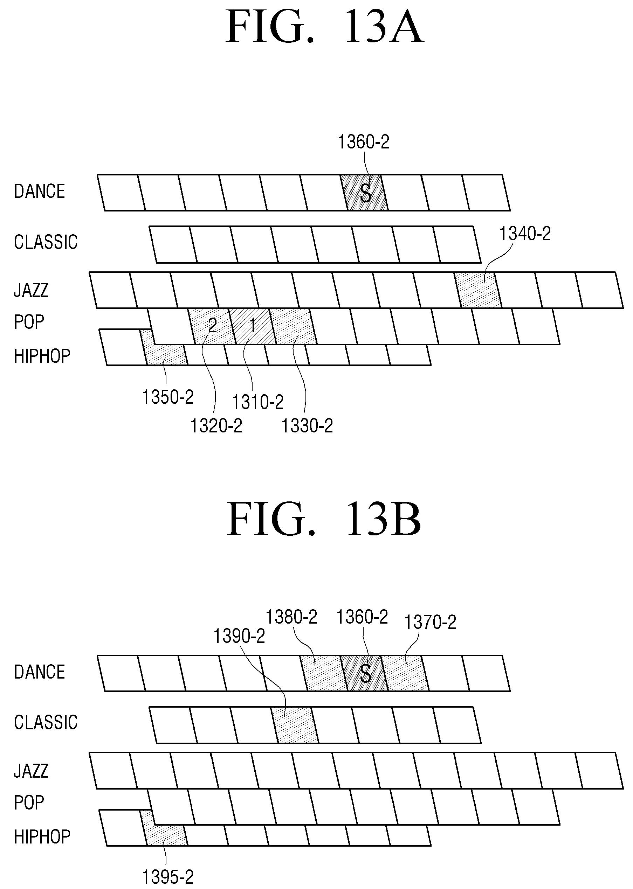

Further, the controller 270 may temporarily store the image about the music content to be displayed on the faces adjoining the sixth face 560-1 in the buffer, based on the sixth face 560-1 positioned on the front. For example, as shown in FIG. 13A, according to an exemplary embodiment, before the third interaction is sensed, the first face 510-1 may display the image about the first music content 1310-2, the second face 520-1 may temporarily store the image about the second music content 1320-2 belonging to the same category as that of the first music content 1310-2, the third face 530-1 may temporarily store the image about the third music content 1330-2 belonging to the same category as that of the first music content 1310-2, the fourth face 540-1 may temporarily store the image about the fourth music content 1340-2 belonging to different category from that of the first music content 1310-2, and the fifth face 550-1 may temporarily store the image about the fifth music content 1350-2 belonging to the different category from that of the first music content 1310-2, as illustrated in FIG. 13A. In this case, the image about the sixth music content 1360-2 as the arbitrary selection may also be temporarily-stored. In an exemplary embodiment, the categories of the content 1350-2 and 1340-2 are adjacent to the category of the first music content 1310-2.

Further, when the third interaction is sensed, as illustrated in FIG. 13B, the sixth face 560-1 may display the image about the sixth music content 1360-2, and the image about the seventh music content 1370-2 to be displayed on the third face 530-1, belonging to the same category as that of the sixth music content 1360-2, may be temporarily stored, the image about the eighth music content 1380-2, to be displayed on the second face 520-1, belonging to the same category as that of the seventh music content 1370-2, may be temporarily stored, the image about the ninth music content 1390-2, to be displayed on the fifth face 550-1, belonging to the different category from that of the seventh music content 1370-2, may be temporarily stored, and the image about the tenth music content 1395-2, to be displayed on the fourth face 540-1, belonging to the different category from that of the seventh music content 1370-2, may be temporarily stored.

The controller 270 may determine a method for selecting the music content according to the direction of the flick interaction. For example, when the flick interaction is in the left and right directions, the controller 270 may select any one of the music content belonging to the same category as that of the currently-reproduced music content. However, when the flick interaction is in the upper and lower directions, the controller 270 may select the music content to be reproduced, by including all the music contents belonging to the different categories as well as music content belonging to the same category as that of the currently-reproduced music content.

Meanwhile, the controller 270 may provide the fade-in/out effect, in which, while the music content is being changed, a volume of a previously-reproduced music content decreases and a volume of a newly-reproduced music content increases. Specifically, when the first to third interactions are sensed, the controller 270 may gradually decrease the volume of the previously-reproduced music, and increase the volume of the newly selected music content, which can provide natural music transition effect.

According to various exemplary embodiments including those described above, a user is able to select and reproduce music content by using a polyhedral UI more easily and intuitively.

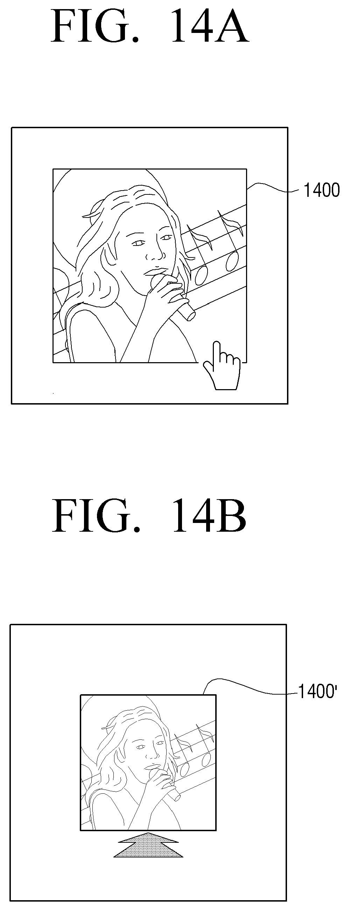

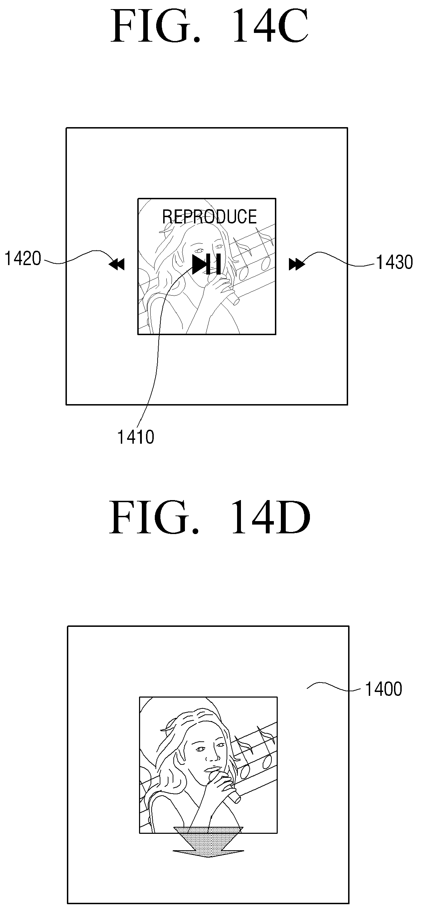

Further, the controller 270 may control the reproducing of the currently-reproduced music content through the polyhedral UI. Specifically, when sensing a user interaction of touching the cover image 1400 while the cover image 1400 is displayed on the first face of the polyhedral UI, as illustrated in FIG. 14A, according to an exemplary embodiment, the controller 270 may control the display 210 to provide the image effect in which the cover image 1400' is moved back with the screen becoming smaller and dimmer, as illustrated in FIG. 14B, according to an exemplary embodiment. Further, the controller 270 may control the display 210 to display UI elements 1410, 1420, 1430 to control the music content, as illustrated in FIG. 14C, according to an exemplary embodiment. In this case, the UI elements may include a UI element 1410 to input a reproduce/stop command regarding the currently-reproduced music content, a UI element 1420 to input a rewind command regarding the music content, and a UI element 1430 to input a forward command regarding the music content. Meanwhile, the UI elements 1410, 1420, 1430 illustrated in FIG. 14C are merely one of exemplary embodiments. The other UI elements (e.g., volume adjust UI element or UI element for adjusting the reproduce mode) may be included. Further, when sensing the user interaction of touching the other area than UI elements 1410, 1420, 1430, the controller 270 may control the display 210 to remove UI elements 1410, 1420, 1430, and provide the image effect in which the cover image 1400 is moved to the front, with the screen becoming larger and brighter, as illustrated in FIG. 14D, according to an exemplary embodiment.

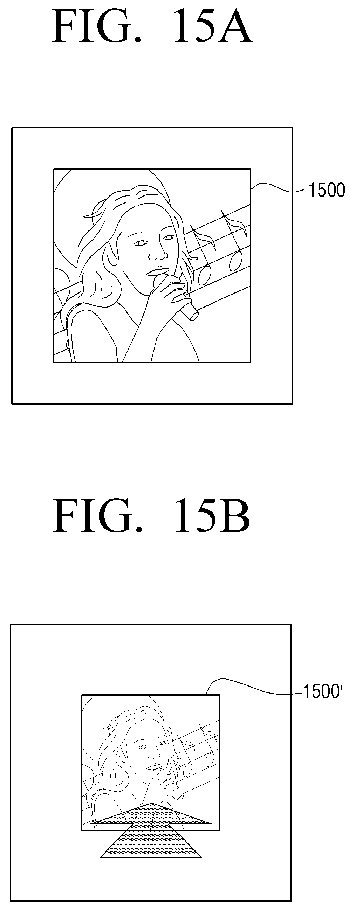

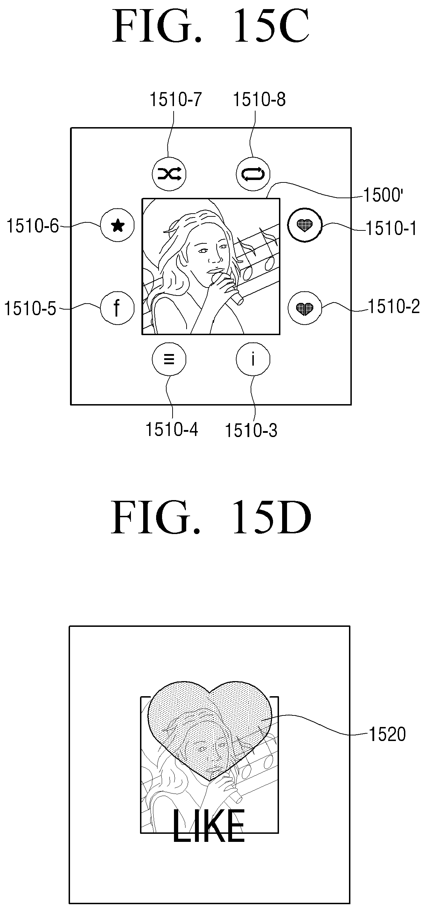

Further, the controller 270 may control the display 210 to display a UI element for setting of the music content according to a preset user interaction. Specifically, the controller 270 may control the display 210 to display the music cover image 1500 on the first face of the polyhedral UI, as illustrated in FIG. 15A, according to an exemplary embodiment. Further, when sensing the long-press interaction of touching one point of the polyhedral UI for a preset time or longer (or the user interaction of selecting an option button of the remote controller) through the sensor 260, the controller 270 may control the display 210 to provide the image effect in which the cover image 1500' is moved back, with the screen becoming smaller and dimmer, as illustrated in FIG. 15B, according to an exemplary embodiment. Further, as illustrated in FIG. 15C, according to an exemplary embodiment, the controller 270 may control the display 210 to display UI elements 1510-1 to 1510-8 for various settings of the music content near the reduced cover image 1500'. In this case, the UI elements for various settings of the music content may include a first UI element 1510-1 with which a user sets the currently-reproduced music as a favorite music, a second UI element 1510-2 with which the user sets the currently-reproduced music as a disliked music, a third UI element 1510-3 with which the user checks detailed information about the currently-reproduced music, a fourth UI element 1510-4 with which the user checks a play list including the currently-reproduced music, a fifth UI element 1510-5 with which the user uploads the currently-reproduced music on a social network service, a sixth UI element 1510-6 with which the user sets a bookmark to the currently-reproduced music, a seventh UI element 1510-7 to set arbitrary reproducing, and an eighth UI element 1510-8 to set repetitive reproducing.

Further, when sensing the user interaction of selecting the first UI element 1510-1, the controller 270 may set the currently-reproduced music as a user's favorite music, and control the display 210 to display the expanded first UI element 1520, as illustrated in FIG. 15D, according to an exemplary embodiment. Further, when sensing the user interaction of selecting the second UI element 1510-2, the controller 270 may set the currently-reproduced music as a user's disliked music and control the display 210 to display the expanded second UI element. Further, when sensing the user interaction of selecting the third UI element 1510-3, the controller 270 may control the display 210 to display the detailed information about the currently-reproduced music. Further, when sensing the user interaction of selecting the fourth UI element 1510-4, the controller 270 may control the display 210 to display a play list including the currently-reproduced music. Further, when the fifth UI element 1510-5 is selected, the controller 270 may control the display 210 to display a screen to upload the currently-reproduced music on the social network service. Further, when sensing the user interaction of selecting the sixth UI element 1510-6, the controller 270 may register the currently-reproduced music as a user's bookmark. Further, when sensing the user interaction of selecting the seventh UI element 1510-7, the controller 270 may set the reproducing mode to be arbitrary reproducing mode. Further, when sensing the user interaction of selecting the eighth UI element 1510-8, the controller 270 may set the reproducing mode to be repetitive reproducing mode.

Further, when the operation corresponding to each UI element is completed, the controller 270 may control the display 210 to display the music cover image 1500 on the first face of the polyhedral UI, as illustrated in FIG. 15A.

Meanwhile, the UI elements for the various settings of the music content may include UI elements besides a plurality of UI elements illustrated in FIG. 15C. For example, a variety of UI elements including a UI element to transmit the polyhedral UI to an external device, a UI element to remove the audio setting of the music content, UI element for the mute setting, and so on, may be displayed.

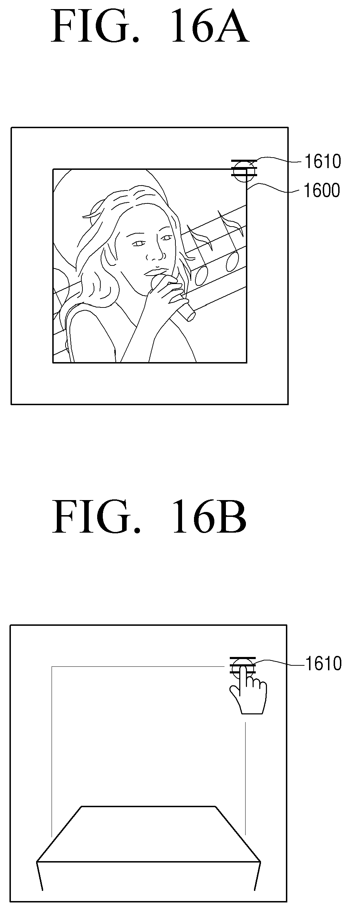

According to another exemplary embodiment, the controller 270 may enter into a menu with a method other than those described above. For example, as illustrated in FIG. 16A, according to an exemplary embodiment, the controller 270 may control the display 210 to display the music cover image 1600 on the first face of the polyhedral UI. Specifically, the controller 270 may control the display 210 to display UI element 1610 for entering into the menu, on an upper end of the music cover image 1600. In this case, UI element 1610 for entering into the menu may be constantly displayed, but this is merely one of exemplary embodiments. Accordingly, the UI element 1610 for entering into the menu may be displayed when a user drags the upper area of the music cover image 1600.

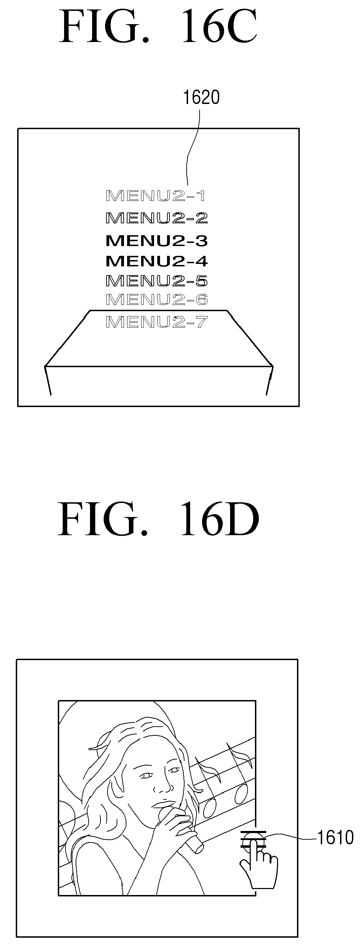

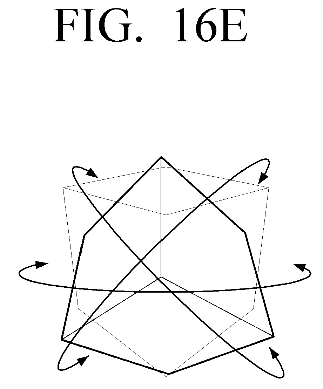

When the UI element 1610 for entering into the menu is selected, the controller 270 may control the display 210 to move the polyhedral UI toward the bottom, as illustrated in FIG. 16B, according to an exemplary embodiment. Further, the controller 270 may control the display 210 to display a list 1620 including a plurality of menus on the center area of the display screen, as illustrated in FIG. 16C, according to an exemplary embodiment. At this process, the UI element 1610 for entering into the menu may be displayed on other area of the music cover image 1600 according to the user drag interaction, as illustrated in FIG. 16D, according to an exemplary embodiment. Further, when one menu is selected while the list 1620 of FIG. 16C is displayed, the controller 270 may control the display 210 to provide the image effect in which the polyhedral UI is rotated for a plurality of times as illustrated in FIG. 16E, according to an exemplary embodiment, and to display the corresponding screen to the selected menu.

Further, the controller 270 may provide various visual effects by using the polyhedral UI.

Specifically, even when the user interaction is not sensed while the first music content is reproduced, the controller 270 may rotate the polyhedral UI so that a user checks the next reproducing music in advance. Specifically, the controller 270 may control the display 210 to rotate the polyhedral UI display and display at least a portion of an image corresponding to the music content next to the first music content, on the second face adjoining the first face, as the reproducing time of the first music content elapses.

Further, the controller 270 may provide feedback through the polyhedral UI to inform that the currently-reproduced music content is the last music content of the corresponding category. Specifically, because, by structure, the polyhedral UI can continue to rotate, it is necessary for the controller 270 to provide the feedback to inform that the last music content is currently being played in the current category. Thus, when the currently-reproduced music content is the last one and the user interaction to reproduce the next music content is sensed, the controller 270 may provide the image effect in which the image about the currently-reproduced music content is stuck e.g., cannot be further rotated in the next direction. Further, when the user interaction to reproduce the next music content is sensed again, the controller 270 may rotate the polyhedral UI, and control the audio outputter 250 to reproduce the first music content of the corresponding category.

Further, the controller 270 may provide information about the current state through the polyhedral UI. Specifically, the controller 270 may change the size of the polyhedral UI according to the size of the current volume. For example, as the volume increases, the controller 270 may adjust the size of the polyhedral UI up, and as the volume decreases, the controller 270 may adjust the size of the polyhedral UI down. Further, when the current network state is unstable, the controller 270 may provide the feedback of shaking the polyhedral UI. Further, the controller 270 may adjust the contrast of the polyhedral UI according to the current battery amount. For example, when the current battery amount is equal to or less than a preset value, the controller 270 may control the display 210 to dimly express the polyhedral UI. Further, when connected to another electronic device, the controller 270 may rotate the polyhedral UI and provide the information about the connected electronic device.

Further, the controller 270 may control the communicator 220 to transmit the information about the currently-displayed polyhedral UI to an external electronic device. Specifically, when a preset user interaction is sensed, the controller 270 may control the communicator 220 to transmit the information about the polyhedral UI to an audio device and another electronic device including the display such as TV. In this case, the information about the polyhedral UI may include the currently-reproduced music content, the image information about the currently-reproduced music content, a play list including the currently-reproduced music content, and so on. As described above, the polyhedral UI displayed on the electronic device 200 may be provided on another electronic device, by transmitting the currently displayed polyhedral UI to a specific electronic device. Thus, a user can share the user environment (i.e., polyhedral UI) with another user of another electronic device.

Further, when the polyhedral UI is transported to another user, another electronic device may adjust the quality of the polyhedral UI by considering the specification. Specifically, when another electronic device is of high specification, such another electronic device may load and display a high resolution image about the music content. When another electronic device is of low specification, another electronic device may load and display a low resolution image or text regarding the music content.

Meanwhile, it is assumed in the exemplary embodiment described above the first to third interaction are touch interactions or button interactions, but this is merely some of exemplary embodiments, and they may be implemented to be various interactions such as motion interactions, voice interactions, and so on. Specifically, when the user interaction is a motion interaction, according to an exemplary embodiment, and when sensing the user interaction of tilting the electronic device 200 to the left or right, the controller 270 may select one of the music contents belonging to the same category as that of the currently music content. Further, when sensing the user interaction of tilting the electronic device 200 upward or downward, the controller 270 may select one of the music content belonging to the different category from that of the currently-reproduced music content. When sensing the user interaction of shaking the electronic device 200 from left to right, or from top to bottom for a plurality of times, the controller 270 may select the arbitrary music content and reproduce the same. In this case, the controller 270 may rotate the polyhedral UI by 90° or rotate it for a plurality of times, according to the direction of the sensed motion interaction.

Further, it is assumed in the exemplary embodiment described above that only one polyhedral UI is displayed, but this is merely one of exemplary embodiments, and accordingly, a plurality of polyhedral UIs may be displayed. A plurality of polyhedral UIs may be respectively mapped with a plurality of users. Further, user verification may be requested for one polyhedral UI to be used among a plurality of polyhedral UIs. Further, the controller 270 may control the communicator 220 to transmit the selected one of a plurality of polyhedral UIs to another electronic device. For example, when sensing the user interaction to transmit the second polyhedral UI to an external electronic device while the first to third polyhedral UI are displayed, the controller 270 may control the communicator 220 to transmit the information about the selected second polyhedral UI to the external electronic device.

Further, it is assumed in the exemplary embodiment described above that the polyhedral UI is hexahedral figure, but this is merely one of exemplary embodiments. Accordingly, the polyhedral UI may be implemented to be various polyhedrons such as regular tetrahedron, regular octahedron, and so on. For example, when a regular tetrahedron is implemented, the first interaction may be the interaction of dragging in the left and right directions, the second interaction may be the interaction of dragging in the lower direction, and the third interaction may be the interaction of dragging in the diagonal direction or the flick interaction.

Further, although it is assumed in exemplary embodiments described above that the image about the music content is displayed on the polyhedral UI, this is merely one of exemplary embodiments. Accordingly, the technical spirit is applicable as long as the output content is a combination of image and audio such as video content, photo content, and so on.

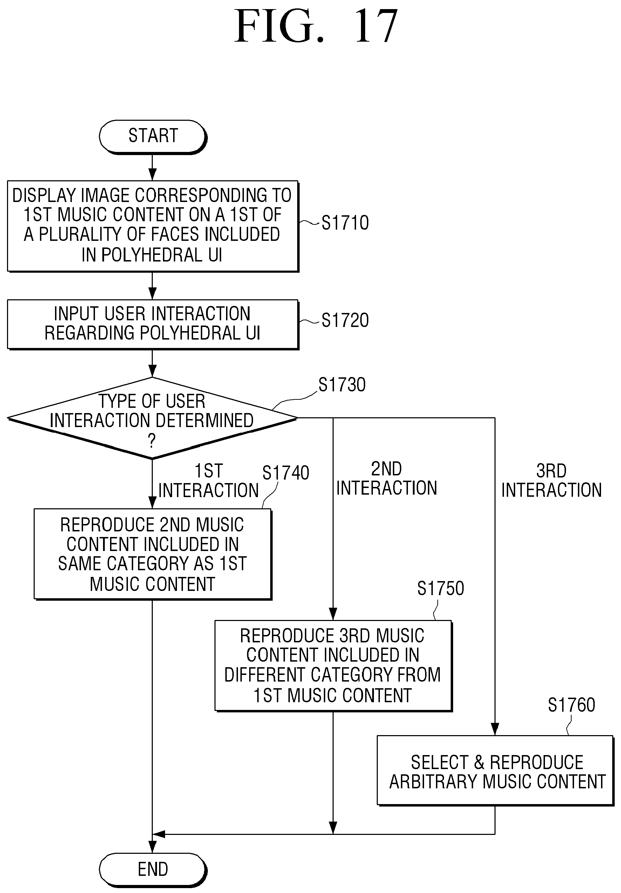

Hereinbelow, a method of controlling an electronic device, according to an exemplary embodiment, will be described by referring to FIG. 17.

In operation S1710, the electronic device 100 may display an image about the first music content on the first face of a plurality of faces included in the polyhedral UI. In this case, the image about the first music content may be a cover image of the first music content.

In operation S1720, the electronic device 100 may sense the user interaction regarding the polyhedral UI. In this case, the user interaction may be touch interaction or button interaction, but not limited thereto but is provided by way of an example.

In operation S1730, the electronic device 100 may determine the type of the user interaction.

When the user interaction is the first interaction, the electronic device 100 may reproduce the second music content included in the same category as that of the first music content, in operation S1740. By way of an example, the first interaction may be touch interaction of touching one point of the polyhedral UI and then dragging in the left and right directions from the point of touch, or button interaction of selecting one of the left and right buttons of the remote controller.

When the user interaction is the second interaction, the electronic device 100 may reproduce the third music content included in the different category from that of the first music content, in operation S1750. For example, the second interaction may be touch interaction of touching one point of the polyhedral UI and then dragging in the upper and lower directions from the point of touch, or button interaction of selecting one of the upper and the lower button of the remote controller.

When the user interaction is the third interaction, the electronic device 100 may select and reproduce the arbitrary music content, in operation S1760. For example, the third interaction may be touch interaction of touching one point of the polyhedral UI and then dragging in the diagonal direction from the point of touch, or flick interaction of dragging with a preset speed or faster.

According to various exemplary embodiments including those described above, a user is able to reproduce music content through a polyhedral UI more easily and intuitively.

The devices (e.g., modules or electronic device 200) or the method (e.g., operations) according to various exemplary embodiments may be performed by at least one computer (e.g., processor) implementing the instructions included in at least one program among the programs maintained in non-transitory computer readable storage media.

When the instructions are performed by the computer (e.g., processor), at least one computer may perform corresponding function to the instructions. The non-transitory computer readable recording medium may be the memory 230, for example.

The program may be included in the non-transitory computer readable recording medium such as hard disk, floppy disk, magnetic media (e.g., magnetic tape), optical media (e.g., CD-ROM or DVD), magneto-optical media (e.g., floptical disk), and hardware unit (e.g., ROM, RAM, flash memory, and so on). In this case, the storage media may be included as part of the electronic device 200, but it may be mounted through a port of the electronic device 200, or may be included in an external device positioned externally from the electronic device 200 (e.g., cloud, server or another electronic device). Further, the program may be divided and stored in a plurality of storing media, in which case at least a portion among a plurality of storage media may be positioned at the external device of the electronic device 200.

The instructions may include not only machine codes such as those created by the compiler, but also high level language codes executable on a computer by use of interpreter, and so on. The hardware device mentioned above may be configured so as to operate as one or more software modules to perform operations according to various exemplary embodiments, and that the reverse is also true.

Further, the foregoing exemplary embodiments and advantages are merely exemplary and are not to be construed as limiting exemplary embodiments. The present exemplary embodiments can be readily applied to other types of apparatuses. Also, the description of the exemplary embodiments is intended to be illustrative, and not to limit the scope of the claims. That is, while exemplary embodiments have been particularly shown and described with reference to Figures, it will be understood by those of ordinary skill in the art that various changes in form and details may be made therein without departing from the spirit and scope of an inventive concept as defined by the appended claims and their equivalents. Exemplary embodiments should be considered in descriptive sense only and not for purposes of a limitation. Therefore, the scope of an inventive concept is defined not by the detailed description of exemplary embodiments but by the appended claims, and their equivalents and all differences within the scope will be construed as being included in the present disclosure.

## Claims

1. An electronic device, comprising:

   a display configured to display a polyhedral user interaction (UI);
   a sensor configured to sense a user interaction with respect to the polyhedral UI;
   an audio outputter configured to reproduce music content; and
   a controller configured such that, while an image of a first music content is being displayed on a first face of a plurality of faces of the polyhedral UI, when the user interaction sensed through the sensor is a first interaction, the controller controls the audio outputter to reproduce a second music content in the same category as the first music content, and when the user interaction is a second interaction, to reproduce a third music content in a different category from the first music content.

2. The electronic device of claim 1, wherein, when the user interaction is a third interaction, the controller controls the audio outputter to select an arbitrary music content and reproduce the same.

3. The electronic device of claim 2, wherein the first interaction is an interaction of touching one point of the polyhedral UI and then dragging in the left and right directions,
   the second interaction is an interaction of touching one point of the polyhedral UI and then dragging in the upper and lower directions, and
   the third interaction is an interaction of touching one point of the polyhedral UI and then dragging in a diagonal direction.

4. The electronic device of claim 3, wherein, when the user interaction is the first interaction, the controller controls the display to rotate the polyhedral UI in the left and right directions to correspond to the user interaction, and
   when the user interaction is the second interaction, the controller controls the display to rotate the polyhedral UI in the upper and lower directions to correspond to the user interaction, and
   when the user interaction is the third interaction, the controller controls the display to rotate the polyhedral UI in the diagonal direction to correspond to the user interaction.

**5.** The electronic device of claim 4, further comprising a buffer configured to temporarily store images of music contents to be displayed on faces adjoining the first face among the plurality of faces.

**6.** The electronic device of claim 5, wherein the controller controls the display such that, when the user interaction is the first interaction or the second interaction, the display displays one of the images temporarily stored in the buffer on the rotated polyhedral UI, and
when the user interaction is the third interaction, the display receives an image about an external music content and displays the same on the rotated polyhedral UI.

**7.** The electronic device of any of claims 2 to 6, wherein the first interaction is an interaction of touching one point of the polyhedral UI and then dragging in the left and right directions,
the second interaction is an interaction of touching one point of the polyhedral UI and then dragging in the upper and lower directions, and
the third interaction is a flick interaction of touching one point of the polyhedral UI and then dragging with a preset speed.

**8.** The electronic device of claim 7, wherein, when the flick interaction is sensed, the controller controls the display to rotate the polyhedral UI according to a direction of the flick interaction.

**9.** The electronic device of claim 8, wherein the controller determines a rotating speed and a rotating amount of the polyhedral UI according to a speed of the flick interaction.

**10.** The electronic device of any of claims 1 to 9, wherein a fade-in/out effect is provided, in which, while the music content is being changed, volume of a previously-reproduced music content decreases and volume of a newly-reproduced music content increases.

**11.** The electronic device of any of claims 1 to 10, wherein the controller controls the display to rotate the polyhedral UI according to an elapse of a reproducing time of the first music content, and display at least a portion of an image corresponding to a music content next to the first music content on a second face adjoining the first face.

**12.** A method of controlling an electronic device, comprising:

displaying an image of a first music content on a first face of a plurality of faces of a polyhedral user interaction (UI);

sensing a user interaction with respect to the polyhedral UI;
when the user interaction is a first interaction, reproducing a second music content in a same category as the first music content, and when the user interaction is a second interaction, reproducing a third music content in a different category from the first music content.

**13.** The controlling method of claim 12, wherein the reproducing comprises, when the user interaction is the third interaction, selecting an arbitrary music content and reproducing the same.

**14.** The controlling method of claim 13, wherein the first interaction is an interaction of touching one point of the polyhedral UI and then dragging in the left and right directions,
the second interaction is an interaction of touching one point of the polyhedral UI and then dragging in the upper and lower directions, and
the third interaction is an interaction of touching one point of the polyhedral UI and then dragging in a diagonal direction.

**15.** The controlling method of claim 14, comprising, when the user interaction is the first interaction, rotating the polyhedral UI in the left and right directions to correspond to the user interaction,
when the user interaction is the second interaction, rotating the polyhedral UI in the upper and lower directions to correspond to the user interaction, and
when the user interaction is the third interaction, rotating the polyhedral UI in a diagonal direction to correspond to the user interaction.

# FIG. 1

100

120
AUDIO OUTPUTTER

110
DISPLAY

140
CONTROLLER

130
SENSOR

# FIG. 2

<u>200</u>

# FIG. 3

340-1 340-2 340-n 340

APPLICATIONS

| APP 1 | APP 2 | .... | APP n |

330

MIDDLEWARE

| MAIN UI FRAMEWORK | WINDOW MANAGER | SUB UI FRAMEWORK |
| SECURITY | SYSTEM MANAGER | MULTIMEDIA FRAMEWORK |
| X II | APP MANAGER | CONNECTING MANAGER |

330-7
330-8
330-9
330-4
330-5
330-6
330-1
330-2
330-3

320

KERNEL

310

O S

# FIG. 4A

410

# FIG. 4B

420

# FIG. 5A

# FIG. 5B

# FIG. 6A

510-1

520-1

1

2

# FIG. 6B

510-1

1

510-1   520-1

1   2

510-1   520-1

1   2

520-1

2

510-1   520-1

1   2

# FIG. 6C

540-2　　520-2

DANCE

CLASSIC

JAZZ

POP

HIPHOP

510-2　550-2　610-2

# FIG. 7

530-1

510-1

# FIG. 8A

# FIG. 8B

# FIG. 8C

DANCE

CLASSIC

JAZZ

POP

HIPHOP

810-2    830-2    820-2

2

1

540-2    510-2

# FIG. 9

510-1

550-1

# FIG. 10

1010

# FIG. 11

1110

# FIG. 12

# FIG. 13A

# FIG. 13B

# FIG. 14A

1400

# FIG. 14B

1400'

# FIG. 14C

1420 — ◀◀   ▶❚   ▶▶ — 1430

REPRODUCE

1410

# FIG. 14D

1400

# FIG. 15A

1500

# FIG. 15B

1500'

# FIG. 15C

1510-7    1510-8

1510-6

1510-5

1500'

1510-1

1510-2

1510-4    1510-3

# FIG. 15D

1520

LIKE

# FIG. 16A

# FIG. 16B

# FIG. 16C

1620

MENU2-1
MENU2-2
**MENU2-3**
**MENU2-4**
MENU2-5
MENU2-6
MENU2-7

# FIG. 16D

1610

# FIG. 16E

# FIG. 17

```
                    ┌─────────────┐
                    │    START    │
                    └──────┬──────┘
                           │
                           ▼
        ┌──────────────────────────────────┐
        │ DISPLAY IMAGE CORRESPONDING TO   │
        │ 1ST MUSIC CONTENT ON A 1ST OF    │──── S1710
        │ A PLURALITY OF FACES INCLUDED    │
        │ IN POLYHEDRAL UI                 │
        └────────────────┬─────────────────┘
                         │
                         ▼
        ┌──────────────────────────────────┐
        │ INPUT USER INTERACTION           │──── S1720
        │ REGARDING POLYHEDRAL UI          │
        └────────────────┬─────────────────┘
                         │
                         ▼
                  ╱─────────────╲  S1730
                 ╱ TYPE OF USER  ╲
                ╱ INTERACTION     ╲
                ╲ DETERMINED       ╱
                 ╲      ?         ╱
                  ╲─────────────╱
```

TYPE OF USER INTERACTION DETERMINED ? — S1730

1ST INTERACTION  S1740

2ND INTERACTION

3RD INTERACTION

REPRODUCE 2ND MUSIC CONTENT INCLUDED IN SAME CATEGORY AS 1ST MUSIC CONTENT

REPRODUCE 3RD MUSIC CONTENT INCLUDED IN DIFFERENT CATEGORY FROM 1ST MUSIC CONTENT — S1750

SELECT & REPRODUCE ARBITRARY MUSIC CONTENT — S1760

END

**EUROPEAN SEARCH REPORT**

Application Number

EP 16 17 3576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/204279 A1 (KWON YONG-HWAN [KR]) 24 July 2014 (2014-07-24)<br>* abstract *<br>* paragraph [0002] - paragraph [0036] *<br>* paragraph [0054] - paragraph [0093]; figures 1-12 *<br>* paragraph [0098] - paragraph [0101]; figures 16-19 *<br>----- | 1-15 | INV.<br>G06F3/0488<br>G06F3/0482<br>G06F3/0485<br>G06F3/0346<br>G06F1/16 |
| X | US 2014/333531 A1 (PHANG JOON-HO [KR] ET AL) 13 November 2014 (2014-11-13)<br>* abstract *<br>* paragraph [0002] - paragraph [0040] *<br>* paragraph [0054] - paragraph [0084]; figures 1-3 *<br>* paragraph [0089] - paragraph [0105]; figure 4 *<br>* paragraph [0111] - paragraph [0116]; figure 5 *<br>* paragraph [0135] - paragraph [0146]; figure 8 *<br>* paragraph [0150] - paragraph [0160]; figures 10-15 *<br>----- | 1-15 | |
| X | US 2008/019240 A1 (ARAKI SATOSHI [JP] ET AL) 24 January 2008 (2008-01-24)<br>* abstract *<br>* paragraph [0002] - paragraph [0012] *<br>* paragraph [0041] - paragraph [0100]; figures 1-9 *<br>* paragraph [0161] - paragraph [0172]; figure 22 *<br>----- | 1,5,6, 10-12 | |

TECHNICAL FIELDS SEARCHED (IPC)

G06F

-/--

The present search report has been drawn up for all claims

| Place of search | Date of completion of the search | Examiner |
|---|---|---|
| The Hague | 5 December 2016 | Ribeiro, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | **Application Number**<br>EP 16 17 3576 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION  (IPC) |
|---|---|---|---|
| A | US 2010/125816 A1 (BEZOS JEFFREY P [US])<br>20 May 2010 (2010-05-20)<br>* abstract *<br>* paragraph [0002] - paragraph [0003] *<br>* paragraph [0023] - paragraph [0032] *<br>* paragraph [0052] - paragraph [0053];<br>figure 5 *<br>----- | 1-15 | |
| A | US 7 487 467 B1 (KAWAHARA HIDEYA [US] ET AL) 3 February 2009 (2009-02-03)<br>* the whole document *<br>----- | 1-15 | |

| | | | TECHNICAL FIELDS<br>SEARCHED      (IPC) |

The present search report has been drawn up for all claims

| Place of search | Date of completion of the search | Examiner |
|---|---|---|
| The Hague | 5 December 2016 | Ribeiro, Jorge |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 17 3576

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2016

| Patent document cited in search report | | Publication date | Patent family member(s) | | Publication date |
|---|---|---|---|---|---|
| US 2014204279 | A1 | 24-07-2014 | EP 2416563 A2 | | 08-02-2012 |
| | | | JP 5791949 B2 | | 07-10-2015 |
| | | | JP 2012038292 A | | 23-02-2012 |
| | | | JP 2016015148 A | | 28-01-2016 |
| | | | KR 20120013727 A | | 15-02-2012 |
| | | | US 2012032901 A1 | | 09-02-2012 |
| | | | US 2014204279 A1 | | 24-07-2014 |
| US 2014333531 | A1 | 13-11-2014 | CN 105230030 A | | 06-01-2016 |
| | | | EP 2995075 A1 | | 16-03-2016 |
| | | | JP 2016528574 A | | 15-09-2016 |
| | | | KR 20140133342 A | | 19-11-2014 |
| | | | US 2014333531 A1 | | 13-11-2014 |
| | | | WO 2014182109 A1 | | 13-11-2014 |
| US 2008019240 | A1 | 24-01-2008 | CN 101110086 A | | 23-01-2008 |
| | | | JP 4573130 B2 | | 04-11-2010 |
| | | | JP 2008026663 A | | 07-02-2008 |
| | | | US 2008019240 A1 | | 24-01-2008 |
| US 2010125816 | A1 | 20-05-2010 | CA 2743914 A1 | | 27-05-2010 |
| | | | CN 102239460 A | | 09-11-2011 |
| | | | EP 2364470 A1 | | 14-09-2011 |
| | | | JP 2012509544 A | | 19-04-2012 |
| | | | KR 20110095894 A | | 25-08-2011 |
| | | | US 2010125816 A1 | | 20-05-2010 |
| | | | US 2014285435 A1 | | 25-09-2014 |
| | | | WO 2010059956 A1 | | 27-05-2010 |
| US 7487467 | B1 | 03-02-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150124721